(19) Europäisches Patentamt / European Patent Office / Office européen des brevets

(11) **EP 3 421 560 B1**

(12) **EUROPEAN PATENT SPECIFICATION**


(45) Date of publication and mention of the grant of the patent: **22.02.2023 Bulletin 2023/08**

(21) Application number: **17756628.8**

(22) Date of filing: **24.02.2017**

(51) International Patent Classification (IPC):
***C09D 163/00*** (2006.01) ***B05D 7/14*** (2006.01)
***B32B 15/092*** (2006.01) ***B32B 27/38*** (2006.01)
***C09D 5/08*** (2006.01) ***C09D 129/10*** (2006.01)
***C09D 157/00*** (2006.01) ***C08G 59/50*** (2006.01)

(52) Cooperative Patent Classification (CPC):
(C-Sets available)
**B05D 7/14; B32B 15/092; B32B 27/38; C08G 59/50; C09D 5/08; C09D 7/40; C09D 129/10; C09D 157/00; C09D 163/00** (Cont.)

(86) International application number: **PCT/JP2017/007031**

(87) International publication number: **WO 2017/146193 (31.08.2017 Gazette 2017/35)**


(54) **ANTICORROSION COATING COMPOSITION, ANTICORROSION COATING FILM, SUBSTRATE WITH ANTICORROSION COATING FILM, AND METHOD OF MANUFACTURING SAME**

KORROSIONSSCHUTZBESCHICHTUNGSZUSAMMENSETZUNG, KORROSIONSSCHUTZBESCHICHTUNGSFILM, SUBSTRAT MIT KORROSIONSSCHUTZBESCHICHTUNGSFILM UND VERFAHREN ZUR HERSTELLUNG DAVON

COMPOSITION DE REVÊTEMENT ANTICORROSION, FILM DE REVÊTEMENT ANTICORROSION, SUBSTRAT POURVU D'UN FILM DE REVÊTEMENT ANTICORROSION, ET SON PROCÉDÉ DE FABRICATION


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2016 JP 2016034314**

(43) Date of publication of application: **02.01.2019 Bulletin 2019/01**



(73) Proprietor: **Chugoku Marine Paints, Ltd.**
**Hiroshima 739-0652 (JP)**

(72) Inventor: **KODAMA Shinsho**
**Otake-shi**
**Hiroshima 739-0652 (JP)**

(74) Representative: **Hoffmann Eitle**
**Patent- und Rechtsanwälte PartmbB**
**Arabellastraße 30**
**81925 München (DE)**



(56) References cited:
**WO-A1-2014/032844** **WO-A1-2015/132366**
**JP-A- H10 259 351** **JP-A- H11 315 250**
**JP-A- S63 304 069** **JP-A- 2001 064 516**
**JP-A- 2002 167 548** **JP-B2- 3 917 279**
**US-A- 3 532 653** **US-A1- 2016 017 172**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 163/00, C08L 29/10;**
**C09D 163/00, C08L 35/08**

**Description**

Technical Field

The present invention relates to an anticorrosive coating composition, an anticorrosive coating film, a substrate with an anticorrosive coating film, and a method of producing a substrate with an anticorrosive coating film.

Background Art

For corrosion prevention, (large) iron and steel structures such as ships, bridges, tanks, plants, marine buoys, and marine pipelines have been conventionally coated with coating films obtained from epoxy resin anticorrosive coating compositions. In order to apply functions such as good appearance, weather resistance, anticorrosion properties, and antifouling properties, such coating films have been coated with top coating compositions based on various resins to form top coating films depending on the uses and objectives of the iron and steel structures. For example, the bottoms of ships are coated with, as top coating compositions, antifouling coating compositions which prevent aquatic organisms such as barnacles, and marine algae from adhering to the bottoms of the ships.

Commonly, a primer coating film formed from an epoxy resin coating composition has poor weather resistance and is therefore prone to result in the deterioration of overcoatability such as interlayer adhesion with a top coating film or a physical property, exhibited by a layered body, with a top coating film. In particular, there is a problem that the interlayer adhesion between the formed primer coating film and the formed top coating film is insufficient when a period from the primer coating application of the epoxy resin coating composition to top coating application is long. Moreover, the problem is known to significantly occur when a hydrolyzable antifouling coating composition is applied onto a primer coating film as a top coating composition.

Various epoxy resin coating compositions have been previously proposed in order to solve such conventional problems. An epoxy resin coating composition containing a vinyl chloride copolymer and an epoxy resin coating composition containing an ethylene/vinyl acetate copolymer are disclosed in Patent Literature 1 and Patent Literature 2, respectively. In addition to the compositions, the adjustment of a reaction ratio to a low level between an epoxy resin and a component that reacts with the resin is widely known as a method of improving the overcoatability of an epoxy resin coating composition to those skilled in the art.

Patent Literature 3 describes an anticorrosive coating composition comprising a binder system selected from epoxy-based binder systems, silicate-based binder systems, polysiloxane-based binder systems, polyurethane-based binder systems, cyclized rubber-based binder systems, and phenoxy resin-based binder systems, zinc particles, microspheres, and at least 0.1 % by weight of a conductive pigment selected from the group consisting of graphite, carbon black, graphene, aluminum, black iron oxide, antimony-doped tin oxide, mica coated with antimony-doped tin oxide, carbon nanotubes, carbon fibers, and any mixture thereof, wherein said microspheres are of spheroidal shape and made of a material selected from glass, ceramics, polymeric materials, and mixtures thereof, with the proviso that said microspheres are not hollow glass microspheres.

Patent Literature 4 describes an anticorrosive coating composition comprising a binder system selected from epoxy-based binder systems, polysiloxane-based binder systems, polyurethane-based binder systems, cyclized rubber-based binder systems, and phenoxy resin-based binder systems, zinc particles, hollow glass microspheres, and a conductive pigment selected from the group consisting of graphite, carbon black, aluminum pigments, black iron oxide, antimony-doped tin oxide, mica coated with antimony-doped tin oxide, indium tin oxide, carbon nanotubes, carbon black fibers, and any mixture thereof.

Patent Literature 5 describes a method for applying a fouling-release coating system to a surface, said method comprising the steps of applying a tie-coat composition to the surface, wherein said tie-coat composition comprises a binder system comprising an epoxy resin, one or more adhesion-promoting agents selected from the group consisting of hydroxy-functional polysiloxanes and $C_{1-4}$-alkoxy-functional polysiloxanes; and a specific amino-silane adduct.

Patent Literature 6 describes an epoxy-type adhesive composition comprising between about 15 % and 60 % by weight of a glycidyl ether of a dihydric phenol said glycidyl ether having an epoxy equivalency greater than 1, between about 25 % and 70 % by weight of a filler chosen from the group consisting of talc, silica, dolomite, anhydrous calcium sulfate, aluminum silicate and mixtures thereof, between about 1 % and 7 % by weight of a flexibilizer chosen from the group consisting of poly (vinyl methyl ether), rosin ester, solid polyamide resin and a copolymer of styrene and butadiene, and a curing agent for said glycidyl ether comprising a mixture of a flexibilizing amine hardener having 3 to 16 carbon groups of 2 to 5 carbon atoms per group, an ether link between the groups and 2 to 3 primary amine groups, and a rigidifying tertiary amine catalyst having 6 to 20 carbon atoms and a boiling point above about 85°C, said mixture being approximately in a stoichiometric amount, and in a stoichiometric proportion thereof between about 70 % and 50 % of said hardener and between about 30 % and 50 % of said catalyst.

Related Art Literature

Patent Literature

Patent Literature 1: JP H10-259351 A
Patent Literature 2: JP 2009-197106 A
Patent Literature 3: WO 2015/132366 A1
Patent Literature 4: WO 2014/032844 A1
Patent Literature 5: US 2016/017172 A1
Patent Literature 6: US 3 532 653 A

Summary of Invention

Technical Problem

A phenomenon may occur in which when a primer coating film formed by coating a substrate with an epoxy resin coating composition containing a vinyl copolymer such as the vinyl chloride copolymer described in Patent Literature 1 or the ethylene/acetic acid vinyl copolymer described in Patent Literature 2 or with an epoxy resin coating composition of which the reaction ratio is adjusted to a low level is overcoated with a top coating composition, the primer coating film is swollen by a solvent in the top coating composition. There is a problem that particularly when such a primer coating film is coated with a crosslinking reaction type top coating (hereinafter both antifouling coating compositions and coating compositions other than the antifouling coating compositions are also referred to as "coatings"), the adhesion to a substrate of the primer coating film is significantly deteriorated by contraction stress generated at the time of curing the top coating composition, thereby resulting in the corrosion of the substrate.

In one embodiment of the present invention, an objective is to provide a coating composition which enables formation of a coating film which has an excellent anticorrosion property and excellent adhesion to a substrate, which is excellent in interlayer adhesion with an obtained top coating film even when an antifouling coating composition, particularly, for example, a hydrolyzable type antifouling coating composition is overcoated as a top coating composition, or a crosslinking reaction type coating is overcoated as a top coating composition, particularly even when a crosslinking reaction type coating is overcoated, and which has excellent overcoatability in which the deterioration of the adhesion to the substrate is inhibited. Furthermore, an objective is also to provide an environmentally-friendly coating composition which can have reduced amount of diluting solvent.

Solution to Problem

As a result of diligent studies of a method by which the problems are solved, the inventor found that the objective can be achieved by allowing a coating composition containing an epoxy resin and an amine curing agent to further contain a polyvinyl alkyl ether (co)polymer, and the present invention was thus accomplished.

The constitution of the present invention is as follows.

<1> An anticorrosive coating composition comprising an epoxy resin (a), a polyvinyl alkyl ether (co)polymer (b), and an amine curing agent (amine-based curing agent) (c) wherein the polyvinyl alkyl ether (co)polymer (b) is a homopolymer of a vinyl alkyl ether represented by Formula (1) or a polyvinyl alkyl ether copolymer obtained by polymerizing the vinyl alkyl ether represented by Formula (1) used in an amount of 50% by weight or more with respect to the total amount of monomer,

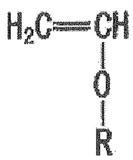 (1)

wherein R represents a straight or branched alkyl group in which the number of carbon atoms is 2 to 4, and wherein the polyvinyl alkyl ether (co)polymer (b) is contained in an amount of 0.1 to 10% by weight as non-volatile content in the non-volatile content of the anticorrosive coating composition.

<2> The anticorrosive coating composition according to <1>, further comprising a reactive diluent (d) having an

epoxy group.

<3> The anticorrosive coating composition according to <1> or <2>, further comprising a vinyl (co)polymer (e) excluding the polyvinyl alkyl ether (co)polymer (b).

<4> An anticorrosive coating film formed using the anticorrosive coating composition according to any one of <1> to <3>.

<5> A substrate with an anticorrosive coating film, the substrate being a layered body of the anticorrosive coating film according to <4> and a substrate.

<6> The substrate with an anticorrosive coating film according to <5>, wherein the substrate is an iron and steel structure.

<7> A method of producing a substrate with an anticorrosive coating film, the method comprising:

applying the anticorrosive coating composition according to any one of <1> to <3> on a substrate; and
curing the coated anticorrosive coating composition to form an anticorrosive coating film.

Advantageous Effects of Invention

The anticorrosive coating composition according to one embodiment of the present invention enables formation of a coating film which has an excellent anticorrosion property and excellent adhesion to a substrate, which is excellent in interlayer adhesion with a top coating film, when, for example, an antifouling coating composition or a crosslinking reaction type coating is overcoated as a top coating composition onto a primer coating film formed from the anticorrosive coating composition, particularly even when a crosslinking reaction type coating is overcoated, and which has excellent overcoatability in which the deterioration of the adhesion to the substrate is inhibited.

Moreover, the anticorrosive coating composition according to one embodiment of the present invention enables the amount of used diluting solvent to be reduced and can be allowed to be an environmentally-friendly coating composition.

Brief Description of Drawings

Fig. 1 is a schematic view illustrating an example of a plan view of a test plate produced with regard to the evaluation of anticorrosion properties.

Description of Embodiments

<Anticorrosive Coating Composition>

An anticorrosive coating composition according to one embodiment of the present invention (hereinafter also referred to as "present composition"), including preferred aspects, will be described in detail below.

The present composition comprises an epoxy resin (a), a polyvinyl alkyl ether (co)polymer (b), and an amine curing agent (c) .

The present composition is preferably a two-component composition comprising a base component and a curing agent component or a multicomponent composition comprising a base component, a curing agent component, and at least one third component in view of, for example, excellent storage stability. Selection of the kind of a curing agent also enables the present composition to be a one-component composition.

For example, in a case of the multicomponent composition, it is preferable that the base component contains an epoxy resin (a), the curing agent component contains an amine curing agent (c), and one component or two or more components of the base component, the curing agent component, and the third component contains a polyvinyl alkyl ether (co)polymer (b) . The present composition obtained by mixing the base component, the curing agent component, and the third component is used, when forming a coating film.

Further, the present composition preferably optionally contains each of a reactive diluent (d) having an epoxy group and a vinyl copolymer (e) (excluding the polyvinyl alkyl ether (co)polymer (b)) which contribute to improvement in coating application properties and the physical properties of a coating film formed from the composition, and may contain other components described later as long as the objective of the present invention is met.

<Epoxy Resin (a)>

Examples of the epoxy resin (a) include, but are not particularly limited to, a polymer or oligomer containing two or more epoxy groups in the molecule, and a polymer or oligomer generated by the ring-opening reaction of the epoxy groups. Examples of such epoxy resins include glycidyl ether type epoxy resins, glycidyl ester type epoxy resins,

glycidyl amine type epoxy resins, bisphenol type epoxy resins, phenol novolac type epoxy resins, cresol type epoxy resins, dicyclopentadiene type epoxy resins, aliphatic epoxy resins, alicyclic epoxy resins, and fatty acid modified epoxy resins. One kind of the epoxy resin (a) may be used singly, or two or more kinds of the epoxy resins (a) may be used.

Among them, bisphenol epoxy resins are preferred, one or more selected from bisphenol A type and bisphenol F type epoxy resins are more preferred, and bisphenol A type epoxy resins are particularly preferred, in a case of applying the present composition on a substrate, in view of, for example, being able to form a coating film excellent in adhesion to the substrate.

Examples of the bisphenol A type epoxy resins include polycondensates of bisphenol A type diglycidyl ethers. Examples of the bisphenol A type diglycidyl ethers include bisphenol A diglycidyl ether, bisphenol A (poly)ethylene oxide diglycidyl ether, and bisphenol A (poly)propylene oxide diglycidyl ether.

At ordinary temperature (a temperature of 15 to 25°C, hereinafter the same applies), the epoxy resin (a) may be in either a liquid or solid state. The epoxy resin (a) preferably has an epoxy equivalent, calculated according to JIS K 7236 (perchloric acid titration method), of 150 to 1,000 g/eq, more preferably 150 to 600 g/eq, and particularly preferably 180 to 500 g/eq.

The epoxy resin (a) may be a resin obtained by synthesis by a conventionally known method or may be a commercially available product. Among such commercially available products, examples of resins which are liquid at ordinary temperature include "E-028" (manufactured by OHTAKE MEISHIN CHEMICAL, CO., LTD., bisphenol A type epoxy resin, epoxy equivalent of 180 to 190 g/eq, viscosity of 12,000 to 15,000 mPa·s/25°C), "jER807" (manufactured by Mitsubishi Chemical Corporation, bisphenol F type epoxy resin, epoxy equivalent of 160 to 180 g/eq, viscosity of 2,000 to 5,000 mPa·s/25°C), and "FLEP 60" (manufactured by Toray Fine Chemicals Co., Ltd., bisphenol S type epoxy resin, epoxy equivalent of 280 g/eq, viscosity of about 17,000 mPa·s/25°C). Examples of resins which are semi-solid at ordinary temperature include "jER834" (manufactured by Mitsubishi Chemical Corporation, bisphenol A type epoxy resin, epoxy equivalent of 230 to 270 g/eq). Examples of resins which are solid at ordinary temperature include "jER1001" (manufactured by Mitsubishi Chemical Corporation, bisphenol A type epoxy resin, epoxy equivalent of 450 to 500 g/eq).

For example, "E-834-85X" (manufactured by OHTAKE MEISHIN CHEMICAL, CO., LTD., solution of bisphenol A type epoxy resin in xylene (834 type epoxy resin solution), epoxy equivalent 280 to 320 g/eq) or "E-001-75X" (manufactured by OHTAKE MEISHIN CHEMICAL, CO., LTD., solution of bisphenol A type epoxy resin in xylene (1001 type epoxy resin solution), epoxy equivalent of 610 to 650 g/eq), which is allowed to be a solution by diluting, with a solvent, the semi-solid or solid epoxy resin described above, may also be used.

It is desirable that the epoxy resin (a) is preferably included in an amount of 5 to 80% by weight, more preferably 5 to 50% by weight, as non-volatile content (solid content) in the present composition (non-volatile content).

<Polyvinyl Alkyl Ether (Co)Polymer (b)>

The polyvinyl alkyl ether (co)polymer (b) is a (co)polymer containing a constitutional unit derived from vinyl alkyl ether represented by the following Formula (1). Use of the polyvinyl alkyl ether (co)polymer (b) enables a coating film excellent in overcoatability to be formed while maintaining the anticorrosion properties and adhesion to a substrate of the coating film.

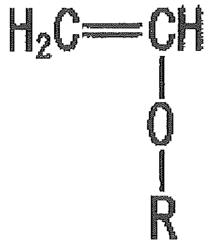

(1)

In Formula (1), R represents a straight or branched alkyl group.

The number of carbon atoms in the alkyl group in Formula (1) is 2 to 4, and preferably 2.

The polyvinyl alkyl ether (co)polymer (b) means a homopolymer of vinyl alkyl ether represented by Formula (1) or a polyvinyl alkyl ether copolymer obtained by polymerizing the vinyl alkyl ether used in an amount of 50% by weight or more with respect to the total amount of monomer, with another monomer (collectively simply referred to as "polyvinyl alkyl ether (co)polymer") . As such a polyvinyl alkyl ether (co)polymer (b), a copolymer in which vinyl alkyl ether represented by Formula (1) is used in an amount of 75% by weight or more with respect to the total amount of monomer is preferred, and a homopolymer is more preferred, in view of, for example, excellent overcoatability. One kind of such a vinyl alkyl ether (co)polymer (b) may be used singly, or two or more kinds of such vinyl alkyl ether (co)polymers (b) may be used.

The other monomer is a compound other than vinyl alkyl ether represented by Formula (1). The compound can be used without any limitations as long as being able to be copolymerized with the vinyl alkyl ether.

As the molecular weight of the polyvinyl alkyl ether (co)polymer (b), a weight average molecular weight Mw (a polystyrene conversion value measured by GPC, hereinafter the same applies) in a range of 500 to 300,000 is preferred. A polymer with Mw in the range has excellent compatibility with the epoxy resin (a). A coating film superior in overcoatability can be formed by using such a polymer with Mw in the range.

Specific examples of the polyvinyl alkyl ether (co)polymer (b) include polyvinyl methyl ether, polyvinyl ethyl ether, polyvinyl isopropyl ether, and polyvinyl isobutyl ether. The polyvinyl alkyl ether (co)polymer (b) may be a polymer obtained by synthesis by a conventionally known method or may be a commercially available product. Examples of the commercially available product include "Lutonal M-40" (manufactured by BASF AG, polyvinyl methyl ether), "Lutonal A-25" (manufactured by BASF AG, polyvinyl ethyl ether), and "Lutonal 1-60" (manufactured by BASF AG, polyvinyl isobutyl ether).

It is desirable that the polyvinyl alkyl ether (co)polymer (b) is contained in an amount of 0.1 to 10% by weight, preferably 0.5 to 7% by weight, as non-volatile content in the present composition (non-volatile content), in view of, for example, excellent anticorrosion properties and overcoatability of a formed coating film. In addition, the polyvinyl alkyl ether (co)polymer (b) is non-reactive with an epoxy resin and an amine curing agent. Therefore, the hardness of the coating film may be insufficient when the polyvinyl alkyl ether (co)polymer (b) is contained in an amount of more than 10% by weight as non-volatile content in the present composition (non-volatile content).

It is desirable that the polyvinyl alkyl ether (co)polymer (b) (non-volatile content) is preferably contained in an amount of 1 to 100 parts by weight, more preferably 1 to 50 parts by weight, with respect to 100 parts by weight of the non-volatile content of the epoxy resin (a) in the present composition, in view of, for example, excellent anticorrosion properties and overcoatability of the formed coating film.

<Amine Curing Agent (c)>

Examples of the amine curing agent (c) include, but are not particularly limited to, aliphatic amine curing agents, alicyclic amine curing agents, aromatic amine curing agents, aromatic-aliphatic amine curing agents, and heterocyclic amine curing agents. One kind thereof may be used singly, or two or more kinds thereof may be used.

Examples of the aliphatic amine curing agents include alkyl monoamines, alkylene polyamines, polyalkylene polyamines, and alkylaminoalkyl amines.

Examples of the alkylene polyamines include compounds represented by Formula: "$H_2N-R^1-NH_2$" ($R^1$ represents a divalent hydrocarbon group having 1 to 12 carbon atoms), and specifically include methylene diamine, ethylene diamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, and trimethyl hexamethylene diamine.

Examples of the polyalkylene polyamines include compounds represented by Formula: "$H_2N-(C_mH_{2m}NH)_nH$" (m represents an integer 1 to 10. n represents an integer 2 to 10, preferably 2 to 6), and specifically include diethylenetriamine, dipropylenetriamine, triethylenetetramine, tripropylenetetramine, tetraethylenepentamine, tetrapropylenepentamine, pentaethylenehexamine, nonaethylenedecamine, and bis(hexamethylene)triamine.

Examples of aliphatic amine curing agents other than them include tetra(aminomethyl)methane, tetrakis(2-aminoethylaminomethyl)methane, 1,3-bis(2'-aminoethylamino)propane, 2,2'-[ethylenebis(iminotrimethyleneimino)]bis(ethanamine), tris(2-aminoethyl)amine, bis(cyanoethyl)diethylenetriamine, and diethylene glycol bis(3-aminopropyl)ether.

Examples of the alicyclic amine curing agents include 1,3-bisaminomethylcyclohexane, 1,4-cyclohexanediamine, 4,4'-methylenebis(cyclohexaneamine), 4,4'-isopropylidenebis(cyclohexaneamine), norbornanediamine, bis(aminomethyl)cyclohexane, isophoronediamine, and menthenediamine (MDA).

Examples of the aromatic amine curing agents include aromatic polyamine compounds having two or more primary amino groups bound to a benzene ring.

More specific examples of the aromatic amine curing agent include phenylenediamine, naphthylenediamine, diaminodiphenylmethane, 2,2-bis(4-aminophenyl)propane, 4,4'-diaminodiphenylether, 4,4'-diaminobenzophenone, 4,4'-diaminodiphenylsulphone, 2,2'-dimethyl-4,4'-diaminodiphenylmethane, 2,4'-diaminobiphenyl, 2,3'-dimethyl-4,4'-diaminobiphenyl, and 3,3'-dimethoxy-4,4'-diaminobiphenyl.

Examples of the aromatic-aliphatic amine curing agents include bis(aminoalkyl)benzene and bis(aminoalkyl)naphthalene.

More specific examples of the aromatic-aliphatic amine curing agents include o-xylylenediamine, m-xylylenediamine (MXDA), p-xylylenediamine, bis(aminomethyl)naphthalene, and bis(aminoethyl)naphthalene.

Examples of the heterocyclic amine curing agents include N-methylpiperazine, morpholine, 1,4-bis-(3-aminopropyl)piperazine, 1,4-diazacycloheptane, 1-(2'-aminoethylpiperazine), 1-[2'-(2"-aminoethylamino)ethyl]piperazine, 1,11-diazacycloeicosane, and 1,15-diazacyclooctacosane.

Examples of other amine curing agents (c) include amines (amine compounds) described in JP-B-S49-48480 and polyether diamine.

Examples of the amine curing agents (c) further include modified products of the amine curing agents described above, such as polyamideamines, amine adducts with epoxy compounds, Mannich modified products (e.g., Mannich modified aliphatic polyamine, phenalkamine or phenalkamide), Michael adducts, ketimine, aldimine, and urethane modified products.

It is desirable that such amine curing agents (c) are preferably one or more selected from polyamideamines, amine adducts of polyamideamines with epoxy compounds, and Mannich modified products, more preferably polyamideamines, in view of, for example, being able to easily obtain a coating film excellent in overcoatability.

An active hydrogen equivalent of the amine curing agent (c) is preferably 50 to 1,000 g/eq, more preferably 80 to 500 g/eq, in view of, for example, being able to easily obtain a coating film having excellent anticorrosion properties. As such an amine curing agent (c), a compound obtained by synthesis by a conventionally known method may be used, or a commercially available product may be used. Examples of the commercially available product include: "AD-71" (manufactured by OHTAKE MEISHIN CHEMICAL, CO., LTD., active hydrogen equivalent of 290 g/eq) which is an aliphatic polyamine; "PA-66S" (manufactured by OHTAKE MEISHIN CHEMICAL, CO., LTD., active hydrogen equivalent of 377 g/eq) and "Ancamide 910" (manufactured by Air Products and Chemicals, Inc., active hydrogen equivalent of 230 g/eq) which are polyamideamines; "PA-23" (manufactured by OHTAKE MEISHIN CHEMICAL, CO., LTD., active hydrogen equivalent of 375 g/eq) and "PA-290 (A)" (manufactured by OHTAKE MEISHIN CHEMICAL, CO., LTD., active hydrogen equivalent of 277 g/eq) which are epoxy adducts of polyamideamines; "MAD-204 (A)" (manufactured by OHTAKE MEISHIN CHEMICAL, CO., LTD., active hydrogen equivalent of 202 g/eq) which is a Mannich modified aromatic-aliphatic polyamine; "ADEKA HARDENER EH-342W3" (manufactured by ADEKA Corporation, active hydrogen equivalent of 110 g/eq) which is a Mannich modified polyamideamine; "SUNMIDE CX-1154" (manufactured by Sanwa Chemical Industry Co., Ltd., active hydrogen equivalent of 255 g/eq) which is a Mannich modified aliphatic polyamine; and "CARDOLITE NX-5459" (manufactured by Cardolite Corporation, active hydrogen equivalent of 164 g/eq) which is a phenalkamine adduct.

The content of the amine curing agent (c) in the present composition is desirably a content in which a reaction ratio calculated from the following Equation (2) or (3) is preferably 0.1 to 1.2, more preferably 0.2 to 1.0, and still more preferably 0.2 to 0.6. It is desirable to adjust the content of the amine curing agent (c) so that the reaction ratio is in the range, in view of, for example, superior anticorrosion properties, coating film strength, and drying properties of a coating film formed from the present composition.

$$\text{Reaction ratio} = \frac{\dfrac{\text{amount of blended amine curing agent (c)}}{\text{active hydrogen equivalent of amine curing agent (c)}} + \dfrac{\text{amount of blended component having reactivity with epoxy resin (a)}}{\text{functional group equivalent of component having reactivity with epoxy resin (a)}}}{\dfrac{\text{amount of blended epoxy resin (a)}}{\text{epoxy equivalent of epoxy resin (a)}} + \dfrac{\text{amount of blended component having reactivity with amine curing agent (c)}}{\text{functional group equivalent of component having reactivity with amine curing agent (c)}}} \quad (2)$$

Examples of "component having reactivity with amine curing agent (c)" in Equation (2) include a reactive diluent (d) having an epoxy group, silane coupling agents, and (meth) acrylate monomers described later, and examples of "component having reactivity with epoxy resin (a)" include silane coupling agents described later. In addition, "functional group equivalent" of each of the components means the mass (g) per functional group of 1 mol of each of the components. Since a silane coupling agent having an amino group or an epoxy group as a reactive group can be used as the silane coupling agent described above, it is necessary to determine whether the silane coupling agent has reactivity with the epoxy resin (a) or the amine curing agent (c) on the basis of the kind of the reactive group and to calculate the reaction ratio.

The curing agent component containing the amine curing agent (c) preferably has a viscosity of 100,000 mPa.s or less, more preferably 50 to 10,000 mPa·s, at 23 ± 1°C, measured using a B-type viscometer (Model "TVB-10", manufactured by Toki Sangyo Co., Ltd.), in view of, for example, excellent workability in production and mixture and coating workability.

<Reactive Diluent (d) Having Epoxy Group>

The reactive diluent (d) having an epoxy group (hereinafter also simply referred to as "reactive diluent") is not particularly limited as long as being a compound other than the epoxy resin (a), but is preferably a compound having at least one to three epoxy groups in the same molecule, still more preferably a compound having one to two epoxy groups in view of, for example, improvement in coating workability, and particularly preferably a compound having one epoxy group. Use of the reactive diluent (d) enables the viscosity of a coating to be lowered without decreasing the amount of

non-volatile content in the present composition, is effective to become high solids of the present composition (an enhancement of a content of a coating film formation component contained in the present composition), and enables overcoatability and coating workability to be improved. One kind of such a reactive diluent (d) may be used singly, or two or more kinds of such reactive diluents (d) may be used.

Examples of the reactive diluent (d) include phenyl glycidyl ethers, alkyl glycidyl ethers (the number of carbon atoms in an alkyl group is 1 to 15, preferably 11 to 15), glycidyl esters ($R^1R^2R^3C$-COO-Gly, the total number of carbon atoms in alkyl groups represented by $R^1$, $R^2$, and $R^3$ is 8 to 10, Gly: glycidyl group), $\alpha$-olefin epoxides ($CH_3$-$(CH_2)_n$-Gly, n = 11 to 13, Gly: the same as above), 1,6-hexanediol diglycidyl ether, neopentyl glycol diglycidyl ether, trimethylol propane triglycidyl ether, cyclohexanedimethanol glycidyl ether, cyclohexanedimethanol diglycidyl ether, alkyl phenyl glycidyl ethers (the number of carbon atoms in an alkyl group is 1 to 20, preferably 1 to 5, e.g. , methyl phenyl glycidyl ether, ethyl phenyl glycidyl ether, and propyl phenyl glycidyl ether), and alkyl phenol glycidyl ethers (the number of carbon atoms in an alkyl group is 1 to 20).

As the reactive diluent (d), a compound obtained by synthesis by a conventionally known method may be used, or a commercially available product may be used. Examples of the commercially available product include "Epodil 759" (manufactured by Air Products and Chemicals, Inc., alkyl ($C_{12}$-$C_{13}$) glycidyl ether, epoxy equivalent of 275 to 290 g/eq), "CARDOLITE Lite2513HP" (manufactured by Cardolite Corporation, alkyl ($C_{15}$) phenol glycidyl ether, epoxy equivalent of 375 to 450 g/eq), "GE-10" (manufactured by CVC Thermoset Specialties, o-cresyl glycidyl ether, epoxy equivalent of 170 to 195 g/eq), and "RIKARESIN DME-100" (manufactured by New Japan Chemical Co., Ltd., 1,4-cyclohexanedimethanol diglycidyl ether, epoxy equivalent of 145 to 170 g/eq).

It is desirable that the reactive diluent (d) is preferably contained in an amount of 1 to 10% by weight, more preferably 1 to 5% by weight, as non-volatile content, in the present composition (non-volatile content), in view of , for example, superior overcoatability of a coating film obtained from the present composition.

In addition, it is desirable that the reactive diluent (d) is preferably contained in an amount of 1 to 100 parts by weight, more preferably 1 to 50 parts by weight, with respect to 100 parts by weight of non-volatile content in the epoxy resin (a) in the present composition, in view of, for example, being able to easily obtain a coating film excellent in overcoatability.

<Vinyl (Co)Polymer (e)>

The vinyl (co)polymer (e) (excluding the polyvinyl alkyl ether (co)polymer (b)) can be used without any particular limitations. Examples of such vinyl (co)polymers (e) include vinyl chloride (co)polymers and vinyl acetate (co)polymers. One kind of the vinyl (co)polymer (e) may be used singly, or two or more kinds of the vinyl (co)polymers (e) may be used.

The present composition indispensably contains the polyvinyl alkyl ether (co)polymer (b), thereby preventing the following problems even when the vinyl (co)polymer (e) is used and enabling an amount of used vinyl (co) polymer (e) to be reduced.

Examples of the vinyl (co)polymer (e) include vinyl chloride homopolymers, vinyl acetate homopolymers, vinyl chloride-vinyl acetate copolymers, vinyl chloride-vinyl propionate copolymers, vinyl chloride-alkyl vinyl ether copolymers, vinyl chloride-acrylonitrile copolymers, vinyl chloride-ethylene copolymers, vinyl chloride-maleic anhydride copolymers, vinyl chloride-alkyl (meth)acrylate copolymers (alkyl group: the number of carbon atoms is around 1 to 5), vinyl chloride-styrene copolymers, vinyl chloride-vinylidene chloride copolymers, vinyl chloride-vinyl stearate copolymers, vinyl chloride-maleic acid (or maleate) copolymers, vinyl chloride-aliphatic vinyl copolymers, ethylene-vinyl acetate copolymers, and vinyl chloride-vinyl acetate-vinyl alcohol copolymers.

As the vinyl (co)polymer (e), a compound obtained by synthesis by a conventionally known method may be used, or a commercially available product may be used. Examples of the commercially available product include "UCAR VAGH" (manufactured by Dow Chemical Japan Ltd., vinyl chloride-vinyl acetate-vinyl alcohol copolymer), "Laroflex MP-25" (manufactured by BASF AG, vinyl chloride-isobutyl vinyl ether copolymer [content of isobutyl vinyl ether is less than 50% by weight]), "EvaflexEV-45X" (manufactured by DUPONT-MITSUI POLYCHEMICALS CO., LTD., ethylene-vinyl acetate copolymer), and "Ultrasen 760" (manufactured by Tosoh Corporation, ethylene-vinyl acetate copolymer).

When such a vinyl (co)polymer (e) is used, an interlayer adhesion of a coating film formed from an obtained composition with a top coating film may be improved, but the viscosity of the composition may be significantly increased due to poor compatibility with the epoxy resin (a). Accordingly, when the viscosity of the composition is significantly increased, a load on the environment or the human body is increased because a large amount of diluting solvent is required for maintaining coating workability. Thus, as a result of the examination of a method of improving compatibility between the vinyl (co)polymer (e) and the epoxy resin (a), it was found that further use of the reactive diluent (d) together allows the compatibility to be improved, enables the amount of solvent in the coating composition to be reduced, and a coating film formed from the obtained composition has excellent adhesion to a substrate and excellent overcoatability. Accordingly, it is desirable to use the vinyl (co)polymer (e) in combination with the reactive diluent (d) when the vinyl (co)polymer (e) is used.

When the vinyl (co)polymer (e) is used, it is desirable that the vinyl (co)polymer (e) is preferably contained in an amount of 1 to 10% by weight, more preferably 1 to 5% by weight, as non-volatile content, in the present composition (non-volatile content), in view of, for example, obtaining a composition having superior coating workability and obtaining a coating film having superior overcoatability.
In addition, it is desirable that the vinyl (co)polymer (e) is preferably contained in an amount of 1 to 100 parts by weight, more preferably 1 to 50 parts by weight, with respect to 100 parts by weight of non-volatile content in the epoxy resin (a) in the present composition, in view of, for example, obtaining a composition having superior coating workability and obtaining a coating film having superior overcoatability.

<Other Components>

In addition to the various components described above, for example, an extender pigment, a coloring pigment, a solvent, a silane coupling agent, a plasticizer (a petroleum resin, a xylene resin, a coumarone resin, a terpene phenol resin, or an acrylic resin), an anti-sagging/anti-settling agent, a curing accelerator, a dispersant, a surface conditioner, a levelling agent, an antifoaming agent, an inorganic dehydrating agent (stabilizer) or an antifouling agent may be blended, as needed, into the present composition, as long as the objective of the present invention is met.

[Extender Pigment]

Specific examples of the extender pigment include barium sulfate, potash feldspar, silica, calcium carbonate, talc, mica, glass flake, and aluminum powder. One kind of the extender pigment may be used singly, or two or more kinds of the extender pigments may be used.

[Coloring Pigment]

Specific examples of the coloring pigment include titanium oxide, red iron oxide, yellow iron oxide, and carbon black. One kind of the coloring pigment may be used singly, or two or more kinds of the coloring pigments may be used.

[Solvent]

As the solvent, which is not particularly limited, a conventionally known solvent can be used. Examples thereof include xylene, toluene, methyl isobutyl ketone, methyl ethyl ketone, butyl acetate, n-butanol, i- butanol, isopropyl alcohol, benzyl alcohol, propylene glycol monomethyl ether, and propylene glycol monomethyl ether acetate. One kind of the solvent may be used singly, or two or more kinds of the solvents may be used.
The content of the solvent in the present composition is not particularly limited, but it is desirable that the solvent is preferably contained in an amount of 0 to 40% by weight, more preferably 10 to 30% by weight, in the present composition in consideration of, for example, coating workability in a selected coating method and anti-settling property of a pigment in stored present composition.

[Silane Coupling Agent]

As the silane coupling agent, which is not particularly limited, a conventionally known compound can be used. The silane coupling agent is preferably a compound that has at least two hydrolyzable groups in the same molecule and that can contribute to, for example, improvement in adhesion to a substrate and a decrease in the viscosity of a coating and more preferably a compound represented by, for example, Formula: $X\text{-}SiMe_nY_{3-n}$ [n represents 0 or 1, X represents a functional group capable of reacting with an organic matter (e.g., an amino group, a vinyl group, an epoxy group, a mercapto group, a halogen group, a group in which a hydrocarbon group is substituted with the group(s), or a hydrocarbon group containing any of the group(s), in which the hydrocarbon group may include for example, an ether bond(s), Me represents a methyl group, and Y represents a hydrolyzable group (e.g., alkoxy group such as methoxy group or ethoxy group) . One kind of such a silane coupling agent may be used singly, or two or more kinds of such silane coupling agents may be used.
Examples of the silane coupling agent include "KBM-403" (manufactured by Shin-Etsu Chemical Co., Ltd., γ-glycidoxypropyltrimethoxysilane) and "Sila-Ace S-510" (manufactured by JNC CORPORATION).
When the silane coupling agent is used, it is desirable that the silane coupling agent is preferably contained in an amount of 0.1 to 10% by weight, more preferably 0.1 to 5% by weight, as non-volatile content in the present composition (non-volatile content). Use of the silane coupling agent in an amount in the range in the present composition results in improvement in coating film performance such as the adhesion of an obtained coating film to a substrate, and particularly in a high-solids anticorrosive coating composition, results in a decrease in the viscosity of the composition, thereby

allowing coating workability to be improved.

[Plasticizer]

Examples of the plasticizer include petroleum resins, xylene resins, coumarone resins, terpene phenol resins, and acrylic resins. One kind of the plasticizer may be used singly, or two or more kinds of the plasticizers may be used. Use of the plasticizer described below in the present composition enables, for example, anticorrosion properties, flexiblity and overcoatability of an obtained coating film to be improved.

The petroleum resin is desirably a hydroxyl group-containing polymer comprising, as a main raw material, a fraction obtained as a by-product by petroleum refining, and is desirably a hydroxyl group-containing petroleum resin having a softening point of 150°C or less, preferably 100°C or less. When the softening point of the petroleum resin is more than 150°C, the viscosity of a coating may become higher, thereby sometimes deteriorating coating workability and deteriorating the physical properties of a coating film.

Specific examples of such petroleum resins include "NECIRES EPX-L" (manufactured by Nevcin Polymers co., indene-styrene type) and "HILENOL PL-1000S" (manufactured by KOLON Chemical Corporation, $C_9$ fraction petroleum resin).

The xylene resin is preferably a resin synthesized from meta-xylene and formaldehyde by a known method. A xylene resin modified by a phenol such as phenol or a bifunctional phenol such as para-t-butylphenol may also be used.

Specific examples of such xylene resins include "NIKANOL Y-51" and "NIKANOL Y-100" (of which both are manufactured by Fudow Company Limited, xylene-formaldehyde resin).

The coumarone resin is preferably a copolymer containing a coumarone component unit, an indene component unit, and a styrene component unit in a main chain. A terminal of the coumarone resin may be modified by phenol, and at least a part of an aromatic ring in the coumarone resin may be hydrogenated.

Specific examples of such coumarone resins include "Nitto Resin Coumarone V-120" and "Nitto Resin Coumarone H-100" (of which both are manufactured by NITTO CHEMICAL CO., LTD.).

The terpene phenol resin is preferably a copolymer of a terpene monomer or a derivative thereof and a phenol compound. Examples of a constitutional unit (hereinafter referred to as "terpene constitutional unit") derived from a terpene or a derivative thereof, included in the terpene phenol resin, include acyclic terpenes and cyclic terpenes, of which examples include monoterpene, sesquiterpene, diterpene, triterpene, and derivatives thereof. Examples of a constitutional unit (hereinafter referred to as "phenol constitutional unit") derived from a phenol compound included in the terpene phenol resin include phenol, cresol, bisphenol A, and derivatives thereof. One kind of the terpene constitutional unit may be present singly in the terpene phenol resin, or two or more kinds of the terpene constitutional units may be present in the terpene phenol resin. One kind of the phenol constitutional unit may be present singly in the terpene phenol resin, or two or more kinds of the phenol constitutional units may be present in the terpene phenol resin. In other words, one or more kinds of terpene monomers or derivatives thereof may be used, and one or more kinds of phenol compounds may be used.

The terpene constitutional unit and the phenol constitutional unit may also be alternately or randomly bound to form the terpene phenol resin.

Specific examples of such terpene phenol resins include "YS POLYSTER U130" and "YS POLYSTER T160" (of which both are manufactured by YASUHARA CHEMICAL CO., LTD.).

Examples of the acrylic resins include acrylic resins formed by (co)polymerizing one or more selected from the monomer group of, for example, (meth)acrylic acid, (meth)acrylates such as methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, tridecyl (meth)acrylate, and stearyl (meth)acrylate; alicyclic/aromatic/heterocyclic ring-containing (meth)acrylates such as cyclohexyl (meth)acrylate, phenyl (meth)acrylate, benzyl (meth)acrylate, isobornyl (meth)acrylate, glycidyl (meth)acrylate, and tetrahydrofurfuryl (meth)acrylate; vinyl group-containing (meth)acrylates such as allyl (meth)acrylate; hydroxy group-containing (meth)acrylates such as 2-hydroxyethyl (meth)acrylate; alkoxy group-containing (meth)acrylates such as 2-methoxyethyl (meth)acrylate; alkylamino group-containing (meth)acrylates such as dimethylaminoethyl (meth)acrylate and diethylaminoethyl (meth)acrylate; di- or tri-(meth)acrylates such as ethyleneglycol di(meth)acrylate, triethyleneglycol di(meth)acrylate, 1,6-hexanediol di(meth)acrylate, and trimethylolpropane tri(meth)acrylate; carboxylic acid-containing (meth)acrylates such as 2-(meth)acryloyloxyethyl phthalate; and fluoro group-containing (meth)acrylates such as trifluoroethyl (meth)acrylate. For example, (meth)acrylic acid is a notation meaning acrylic acid or methacrylic acid, and the other similar notation represents a similar meaning.

The acrylic resins further include acrylic resins formed by copolymerizing the monomer group with further one or more selected from, for example, styrene, vinyl acetate, propionic acid, vinyl butyrate, vinyl benzoate, vinyl toluene, $\alpha$-methylstyrene, crotonates, and itaconates. The ratio of a monomer used in the acrylic resins is not particularly limited. The acrylic resins may be modified acrylic resins such as alkyd-modified, silicone-modified, and urethane-modified acrylic resins, as needed.

Specific examples of such acrylic resins include "ACP-601" (manufactured by OHTAKE MEISHIN CHEMICAL, CO., LTD., Mw 50,000).

[Anti-sagging/Anti-settling Agent]

The anti-sagging/anti-settling agent can impart thixotropy to the present composition to improve the adhesion of the composition to a substrate. Examples of the anti-sagging/anti-settling agent include, but are not particularly limited to, organic thixotropic agents and inorganic thixotropic agents. One kind of the anti-sagging/anti-settling agent may be used singly, or two or more kinds of the anti-sagging/anti-settling agents may be used.

Examples of the organic thixotropic agents include amide wax, specifically, "ASA T-250F" (manufactured by Itoh Oil Chemicals Co., Ltd.). Examples of other organic thixotropic agents include hydrogenated castor oil thixotropic agents, oxidized polyethylene thixotropic agents, polymerized-vegetable oil thixotropic agents, surfactant thixotropic agents, and thixotropic agents in which two or more kinds thereof are used in combination.

Examples of the inorganic thixotropic agents include pulverized silica, bentonite, silica surface-treated with, for example, a silane compound, bentonite (organic bentonite) surface-treated with, for example, a quaternary ammonium salt, ultrafinely surface treated calcium carbonate, and mixtures thereof.

[Curing Accelerator]

Examples of the curing accelerator include tertiary amines and polymerizable (meth)acrylate monomers. Specifically, for example, triethanolamine, dialkylaminoethanol, triethylenediamine[1,4-diazacyclo(2,2,2)octane] or 2, 4, 6-tri (dimethylaminomethyl)phenol may be used as the tertiary amines, and examples of commercially available products thereof include "Ancamine K-54" (manufactured by Air Products and Chemicals, Inc., 2,4,6-tri(dimethylaminomethyl)phenol). Examples of commercially available products of the polymerizable (meth)acrylate monomers include "M-CURE 100" (monofunctional aromatic acrylate, functional group equivalent of 257 to 267 g/eq), "M-CURE 200" (bifunctional aromatic acrylate, functional group equivalent of 130 to 140 g/eq), "M-CURE 201" (bifunctional aliphatic acrylate, functional group equivalent of 95 to 105 g/eq), "M-CURE 300" (trifunctional aliphatic acrylate, functional group equivalent of 112 to 122 g/eq), and "M-CURE 400" (tetrafunctional aliphatic acrylate, functional group equivalent of 80 to 90 g/eq) (of which all are manufactured by SARTOMER COMPANY, INC).

One kind of the curing accelerator may be used singly, or two or more kinds of the curing accelerators may be used.

When the curing accelerator is used, it is desirable that the curing accelerator is preferably contained in an amount of 0.05 to 5.0% by weight (non-volatile content) in the present composition (non-volatile content).

[Other Components except the Above]

In addition to the other components except described above, for example, a dispersant, a surface conditioner, a levelling agent or an antifoaming agent may be blended into the present composition. Specific examples thereof include "ANTI-TERRA-U" (manufactured by BYK Japan KK, wetting and dispersing agent, salt of unsaturated polyaminoamide and low-molecular-weight polyester acid), "ANTI-TERRA-204" (manufactured by BYK Japan KK, wetting and dispersing agent, polycarboxylate of polyaminoamide), "BYK-P104" (manufactured by BYK Japan KK, wet dispersant, unsaturated polycarboxylic acid polymer), "BYK-350" (manufactured by BYK Japan KK, surface conditioner, acrylic copolymer), "BYKETOL-OK" (manufactured by BYK Japan KK, levelling agent, high-boiling-point aromatic hydrocarbon), "BYK-354" (manufactured by BYK Japan KK, antifoaming agent, acrylic polymer), and "BYK-1790" (manufactured by BYK Japan KK, antifoaming agent, mixture of foam-breaking polymer).

When the present composition is a two-component composition or a multicomponent composition, it is desirable that a curing agent component is contained in an amount of 2 to 200 parts by weight, preferably 5 to 50 parts by weight, particularly preferably 8 to 40 parts by weight, with respect to 100 parts by weight of a base component, and a volume solid of the present composition (hereinafter also referred to as "solid volume") (in conformity with ISO3233: 1998) is preferably adjust to be 50 to 100%, more preferably 60 to 85%. Such a range enables obtainment of a coating composition suitable for coating application such as air spray, airless spray, or brush coating. Commonly, when the solid volume of a coating composition is 70% or more, the coating composition can say a high-solids-type coating composition. A high-solids-type coating composition and further a solventless coating can also be made by adjusting the content of solvent in the present composition. When a solid volume in the present composition can be raised in such a manner, the content of volatile organic solvent (VOC) due to the solvent can be reduced to a low level, therefore, a load on the environment and the human body is reduced, and the amount of volatile component is reduced, thereby resulting in effectiveness for the promotion of the efficiency of coating application.

The present composition (which is a composition obtained by mixing a base component and a curing agent

component in the case of the two-component composition or a composition obtained by mixing a base component, a curing agent component, and a third component in the case of the multicomponent composition such as a three-component composition) preferably has a viscosity of 1 to 50 dPa-s at 23 ± 1°C, measured using a viscometer (manufactured by RION Co., Ltd., Model "Viscometer VT-04F"). In addition, it is desirable that the base component of the two-component or multicomponent composition preferably has a viscosity of 1 to 150 dPa-s at 23 ± 1°C, measured using the viscometer (the same as above). The viscosity of the present composition can be adjusted in such a range by using the above-described component in the above-described amount as appropriate.

<Anticorrosive Coating Film and Substrate with Anticorrosive Coating Film>

An anticorrosive coating film according to one embodiment of the present invention (hereinafter also referred to as "the present anticorrosive coating film") is formed from the present composition described above, and a substrate with an anticorrosive coating film according to one embodiment of the present invention is a layered body of the present anticorrosive coating film and a substrate.

A material constituting the substrate is not particularly limited, and examples thereof include: metallic materials comprising iron and steels (such as iron, steel, alloy iron, carbon steel, and alloy steel) and nonferrous metals (such as zinc, aluminum, and stainless steel); and a metallic material of which a surface is coated with, for example, an epoxy resin coating film. Examples of the substrate include iron and steel structures such as: ships; land structures such as bridges, tanks, plants, and steel towers; and marine structures such as harbor facilities, marine buoys, marine pipelines, FPSOs (floating production storage and offloading of oil/gas), FLNGs (floating liquefied natural gas facilities), oil drilling rigs, petroleum storage station, mega-floats, offshore wind power generation facilities, and tidal power generation facilities.

The present anticorrosive coating film is formed from the present composition described above, is specifically a cured product of the present composition, and can be produced by curing the present composition. In the case of the curing, it is preferable to cure the present composition coated on the substrate.

A method of producing a substrate with the anticorrosive coating film comprises: a step of applying the present composition described above on a substrate; and a step of curing the coated composition to form an anticorrosive coating film.

A method of applying (coating) the present composition on the substrate is not particularly limited. As the method, a conventionally known method may be used without any limitations. Examples thereof include airless spray, air spray, brush coating, roller coating, and dipping.

It is preferable to clean and remove a substrate surface deposit such as rust, oil and fat, water, dust, slime, or salt before applying the present composition on the substrate in order to secure favorable adhesion between the present composition and the substrate.

The viscosity of the present composition can be adjusted as appropriate by adding a diluting solvent depending on a coating method. For example, in a case of applying by airless spray, the viscosity of a coating composition is preferably adjusted to around 20 dPa-s.

A method of curing the coated composition is not particularly limited. The coated composition may be cured by being heated to around 5 to 60°C in order to shorten a curing time. Typically, the coated composition is cured by being left standing for around 1 to 14 days under atmospheric air at ordinary temperature.

The present anticorrosive coating film and the substrate with the anticorrosive coating film are typically used by applying a top coating composition on the anticorrosive coating film to form a top coating film.

Examples of top coating compositions which can be coated on the present anticorrosive coating film include coating compositions, for example, based on oil type (alkyd) resins, phthalic acid resins, chlorinated polyolefin resins (chlorinated rubbers), vinyl resins, acrylic resins, epoxy resins, urethane resins, silicone resins (including, for example, silicone alkyd resins and acrylic silicone resins) and fluorine resins, as well as various antifouling coating compositions (for example, compositions, for example, based on chlorinated rubber resins, vinyl resins, hydration decomposition types, non-organotin hydrolyzable types [based on, for example, metallic acrylic resins or polyester resins] and silicone resins). Examples of the compositions based on the metallic acrylic resins include compositions based on zinc acrylic resins, copper acrylic resins, and silyl resins. In particular, specific examples of the compositions based on the silyl resins include compositions comprising hydrolyzable resins formed by (co)polymerizing triisopropylsilyl acrylate (TIPSA) and/or triisopropylsilyl methacrylate (TIPSMA). Among such top coating compositions, crosslinking reaction type top coatings and hydrolyzable type antifouling coating compositions are preferred in view of, for example, exhibition of excellent overcoatability with the present anticorrosive coating film. As the crosslinking reaction type top coatings, epoxy resin and urethane resin coatings are more preferred. As the hydrolyzable type antifouling coating compositions, compositions comprising hydrolyzable resins having structural units derived from triisopropylsilyl methacrylate (TIPSMA) are more preferred.

Like the present composition, a method of applying the top coating composition is not particularly limited. As

the method, a conventionally known method may be used without any limitations.

It is preferable to clean and remove a surface deposit such as oil and fat, water, or dust before applying the composition on the present anticorrosive coating film in order to secure favorable adhesion between the top coating composition and the present anticorrosive coating film.

The coated top coating composition is typically dried and cured. A method of the drying and curing is not particularly limited. The drying and curing can be performed in a manner similar to the method of drying and curing the anticorrosive coating film.

The coating film thicknesses of the anticorrosive coating film and the top coating film are not particularly limited but are selected depending on an use application or objective as appropriate. The dried film thickness of the anticorrosive coating film is preferably 50 to 1,000 μm, and the dried film thickness of the top coating film is preferably 20 to 300 μm. The anticorrosive coating film and the top coating film may be formed by one or several times of coating application(s) (one time of coating application means a coating method in which a series of steps of applying and subsequent curing is performed, and several times of coating applications mean a coating method in which several series of the steps are performed). The film thickness achieved by one time of coating application is not particularly limited but is selected as appropriate so that the desired film thickness is obtained by performing all the coating application steps.

Examples

The present invention will be further specifically described below with reference to Examples. However, the present invention is not limited to these Examples.

[Example 1]

As set forth in the following Table 1-1, 33 parts by weight of epoxy resin "E834-85X (T) ", 1 part by weight of polyvinyl alkyl ether 1 "Lutonal A-25", 20 parts by weight of talc "F-2 Talc", 21.48 parts by weight of potash feldspar "potash feldspar KM325", 5 parts by weight of barium sulfate "Barico 300W", 4 parts by weight of titanium oxide "Titanium White R-930", 0.02 parts by weight of carbon black "MA-100", 0.3 parts by weight of acrylate monomer "M-CURE 400", 0.6 parts by weight of silane coupling agent "KBM-403", 0.2 parts by weight of antifoaming agent "BYK-1790", 0.9 parts by weight of anti-sagging agent "ASA T-250F", 10 parts by weight of xylene, 1.5 parts by weight of n-butanol, and 2 parts by weight of propylene glycol monomethyl ether acetate were put in a container, glass beads were added thereto, and these blending components were mixed by a paint shaker. Then, the glass beads were removed, and the resultant was dispersed at a room temperature (23°C) by using a high-speed disperser until becoming homogeneous, then warmed to 56 to 60°C, and cooled to 30°C or less to prepare a base component of an anticorrosive coating composition.

As set forth in the following Table 1-2, a curing agent component of the anticorrosive coating composition was prepared by mixing 90 parts by weight of polyamide curing agent 1 "PA-66S", 1 part by weight of tertiary amine "Ancamine K-54", and 9 parts by weight of benzyl alcohol by using a high-speed disperser (under ordinary temperature and ordinary pressure).

Each of the base component and the curing agent component was prepared as described above to obtain the two-component anticorrosive coating composition. The anticorrosive coating composition was prepared by mixing the obtained base component and the obtained curing agent component at a mixture ratio set forth in Table 1-2, before coating application.

[Examples 2 to 6 and 8 to 18, Reference Example 7 and Comparative Examples 1 to 3]

Each anticorrosive coating composition was prepared in the same manner as that in Example 1 except that the components contained in each of the base component and the curing agent component in Example 1, the blending amounts thereof, and the mixture ratio between the base component and the curing agent component were changed as set forth in the following Tables 1-1 and 1-2.

[Table 1-1]

| | Blending components \ Examples, Comparative Examples | Examples | | | | | | | | | | | | | | | | | | Comparative Examples | | |
|---|---|---|---|---|---|---|---|---|---|---|---|---|---|---|---|---|---|---|---|---|---|---|
| | | 1 | 2 | 3 | 4 | 5 | 6 | 7* | 8 | 9 | 10 | 11 | 12 | 13 | 14 | 15 | 16 | 17 | 18 | 1 | 2 | 3 |
| Base component | Epoxy resin | 33 | 30 | 30 | 30 | 30 | 30 | 33 | 33 | 32 | 30 | 30 | 30 | 30 | 30 | 30 | 30 | 30 | 30 | 30 | 30 | 34 |
| | Reactive diluent | | | | | | | | | | | | 4 | 4 | 4 | 4 | 4 | 4 | 4 | | | |
| | Polyvinyl alkyl ether 1 | 1 | 2 | 4 | 6 | 4 | 4 | | | | 2 | 2 | 2 | 4 | 1 | 2 | 1 | 2 | 1 | | | |
| | Polyvinyl alkyl ether 2 | | | | | | | 1.4 | | | | | | | | | | | | | | |
| | Polyvinyl alkyl ether 3 | | | | | | | | 1.3 | 2.5 | | | | | | | | | | | | |
| | Vinyl chloride -isobutyl vinyl ether copolymer | | | | | | | | | | 2 | | | | 2 | 2 | | | 2 | 4 | | |
| | Ethylene-vinyl acetate copolymer | | | | | | | | | | | 2 | | | | | 2 | 2 | | | 4 | |
| | Talc | 20 | 20 | 20 | 20 | 20 | 20 | 20 | 20 | 20 | 20 | 20 | 20 | 20 | 20 | 20 | 20 | 20 | 20 | 20 | 20 | 20 |
| | Potash feldspar | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 | 21.48 |
| | Barium sulfate | 5 | 5 | 5 | 5 | 5 | 5 | 5 | 5 | 5 | 5 | 5 | 5 | 5 | 5 | 5 | 5 | 5 | 5 | 5 | 5 | 5 |
| | Titanium oxide | 4 | 4 | 4 | 4 | 4 | 4 | 4 | 4 | 4 | 4 | 4 | 4 | 4 | 4 | 4 | 4 | 4 | 4 | 4 | 4 | 4 |
| | Carbon black | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 |
| | Acrylate monomer | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silane coupling agent | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | Antifoaming agent | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Anti-sagging agent | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 |
| | Xylene | 10 | 12 | 10 | 8 | 10 | 10 | 9.6 | 9.7 | 9.5 | 10 | 10 | 8 | 6 | 7 | 6 | 7 | 6 | 7 | 10 | 10 | 10 |
| | n-Butanol | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Propylene glycol monomethyl ether acetate | 2 | 2 | 2 | 2 | 2 | 2 | 2 | 2 | 2 | 2 | 2 | 2 | 2 | 2 | 2 | 2 | 2 | 2 | 2 | 2 | 2 |
| | Subtotal (part(s) by weight) | 100 | 100 | 100 | 100 | 100 | 100 | 100 | 100 | 100 | 100 | 100 | 100 | 100 | 100 | 100 | 100 | 100 | 100 | 100 | 100 | 100 |

* Reference Example

[Table 1-2]

| | Blending components \ Examples, Comparative Examples | | Examples | | | | | | | | | | | | | | | | | | Comparative Examples | | |
|---|---|---|---|---|---|---|---|---|---|---|---|---|---|---|---|---|---|---|---|---|---|---|---|
| | | | 1 | 2 | 3 | 4 | 5 | 6 | 7* | 8 | 9 | 10 | 11 | 12 | 13 | 14 | 15 | 16 | 17 | 18 | 1 | 2 | 3 |
| Curing agent component | Polyamide curing agent 1 | | 90 | 90 | 90 | 90 | | | 90 | 90 | 90 | 90 | 90 | 90 | 90 | 90 | 90 | 90 | 90 | 60 | 90 | 90 | 90 |
| | Polyamide adduct curing agent | | | | | | 90 | | | | | | | | | | | | | | | | |
| | Mannich curing agent | | | | | | | 50 | | | | | | | | | | | | | | | |
| | Polyamide curing agent 2 | | | | | | | | | | | | | | | | | | | 30 | | | |
| | Tertiary amine | | 1 | 1 | 1 | 1 | 1 | 1 | 1 | 1 | 1 | 1 | 1 | 1 | 1 | 1 | 1 | 1 | 1 | 1 | 1 | 1 | 1 |
| | n-Butanol | | | | | | | 40 | | | | | | | | | | | | | | | |
| | Benzyl alcohol | | 9 | 9 | 9 | 9 | 9 | 9 | 9 | 9 | 9 | 9 | 9 | 9 | 9 | 9 | 9 | 9 | 9 | 9 | 9 | 9 | 9 |
| | Subtotal (part(s) by weight) | | 100 | 100 | 100 | 100 | 100 | 100 | 100 | 100 | 100 | 100 | 100 | 100 | 100 | 100 | 100 | 100 | 100 | 100 | 100 | 100 | 100 |
| All components | Mixture ratio | Base component | 87 | 87 | 87 | 87 | 88 | 90 | 87 | 87 | 87 | 87 | 87 | 87 | 87 | 87 | 87 | 87 | 87 | 87 | 87 | 87 | 87 |
| | | Curing agent component | 13 | 13 | 13 | 13 | 12 | 10 | 13 | 13 | 13 | 13 | 13 | 13 | 13 | 13 | 13 | 13 | 13 | 13 | 13 | 13 | 13 |
| | Solid volume (%) | | 66.2 | 64.3 | 67.0 | 69.8 | 67.0 | 64.0 | 66.1 | 66.2 | 66.4 | 66.8 | 66.8 | 69.7 | 72.5 | 71.0 | 72.4 | 73.6 | 75.0 | 73.4 | 66.6 | 66.6 | 65.9 |
| | Content (% by weight) of component (a) (non-volatile content) with respect to coating composition (non-volatile content) | | 31.3 | 29.0 | 28.3 | 27.7 | 28.5 | 29.7 | 31.3 | 31.3 | 30.3 | 28.3 | 28.3 | 27.7 | 27.1 | 27.4 | 27.1 | 27.4 | 27.1 | 26.8 | 28.3 | 28.3 | 32.3 |
| | Content (% by weight) of component (b) (non-volatile content) with respect to coating composition (non-volatile content) | | 1.1 | 2.3 | 4.4 | 6.5 | 4.5 | 4.7 | 1.1 | 1.2 | 2.2 | 2.2 | 2.2 | 2.2 | 4.3 | 1.1 | 2.1 | 1.1 | 2.1 | 1.1 | | | |
| | Content (% by weight) of component (d) (non-volatile content) with respect to coating composition (non-volatile content) | | | | | | | | | | | | | 4.3 | 4.3 | 4.3 | 4.3 | 4.3 | 4.3 | 4.2 | | | |
| | Content (% by weight) of component (e) (non-volatile content) with respect to coating composition (non-volatile content) | | | | | | | | | | | 2.2 | 2.2 | | | 2.1 | 2.1 | 2.2 | 2.1 | 2.1 | 4.4 | 4.4 | |
| | Reaction ratio | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.4 | 0.3 | 0.3 | 0.3 |

* Reference Example

<Raw Materials Used>

·Epoxy resin

"E834-85X (T)" (manufactured by OHTAKE MEISHIN CHEMICAL, CO., LTD., bisphenol A type epoxy resin (semisolid at ordinary temperature), epoxy equivalent of 290 to 310 g/eq, 85% of non-volatile content)

-Reactive diluent

"CARDOLITE Lite2513HP" (manufactured by Cardolite Corporation, alkyl phenol glycidyl ether, epoxy equivalent of 375 to 450 g/eq)

-Polyvinyl alkyl ether 1

"Lutonal A-25" (manufactured by BASF AG, polyvinyl ethyl ether)

-Polyvinyl alkyl ether 2

"Lutonal M-40" (manufactured by BASF AG, polyvinyl methyl ether, 70% of non-volatile content)

-Polyvinyl alkyl ether 3

"Lutonal I-60" (manufactured by BASF AG, polyvinyl isobutyl ether, 80% of non-volatile content)

-Vinyl chloride-isobutyl vinyl ether copolymer

"Laroflex MP-25" (manufactured by BASF AG)

-Ethylene-vinyl acetate copolymer

"Ultrasen 760" (manufactured by Tosoh Corporation)

-Talc

"F-2 Talc" (manufactured by FUJI TALC INDUSTRIAL CO., LTD.)

-Potash feldspar

"Potash Feldspar KM325" (manufactured by Commercial Mineral Corporation, potassium feldspar)

-Barium sulfate

"Barico 300W" (manufactured by HakusuiTech Co., Ltd.)

·Titanium oxide

"Titanium White R-930" (manufactured by Sakai Chemical Industry Co., Ltd., titanium dioxide)

-Carbon black

"MA-100" (manufactured by Mitsubishi Chemical Corporation)

·Acrylate monomer

"M-CURE 400" (manufactured by SARTOMER COMPANY, INC, tetrafunctional aliphatic acrylate, functional group equivalent of 80 to 90 g/eq)

-Silane coupling agent

"KBM-403" (manufactured by Shin-Etsu Chemical Co., Ltd., γ-glycidoxypropyltrimethoxysilane, epoxy equivalent of 236 g/eq)

-Antifoaming agent

"BYK-1790" (manufactured by BYK Japan KK)

-Anti-sagging agent

"ASA T-250F" (manufactured by Itoh Oil Chemicals Co., Ltd., amide wax)

-Polyamide curing agent 1

"PA-66S" (manufactured by OHTAKE MEISHIN CHEMICAL, CO., LTD., active hydrogen equivalent of 377 g/eq, 60% of non-volatile content)

·Polyamide adduct curing agent

"PA-23" (manufactured by OHTAKE MEISHIN CHEMICAL, CO., LTD., active hydrogen equivalent of 375 g/eq, 60% of non-volatile content)

·Mannich curing agent

"NX-5459" (manufactured by Cardolite Corporation, active hydrogen equivalent of 164 g/eq, 70% of non-volatile content)

·Polyamide curing agent 2

"Ancamide 910" (manufactured by Air Products and Chemicals, Inc., active hydrogen equivalent of 230 g/eq)

-Tertiary amine

"Ancamine K-54" (2,4,6-tri(dimethylaminomethyl)phenol, manufactured by Air Products and Chemicals, Inc.)

<Non-Volatile Content>

According to JIS K 5601-1-2, 1 ± 0.1 g of a measurement sample (each component such as a base component or a curing agent component, or the present composition) was collected, and the non-volatile content of the present composition was calculated based on a heating residue in the case of heating the sample at a heating temperature of 125°C for 1 hour (under ordinary pressure).

<Solid Volume>

The solid volume of the present composition was calculated by measuring the volume of the composition and the volume of the non-volatile content of the composition, according to ISO3233: 1998.

The anticorrosive coating composition of each of Examples and Comparative Examples, prepared as described above, was used and subjected to the following test to evaluate the viscosity of the anticorrosive coating composition, overcoatability, and anticorrosion property.

<Measurement of Viscosity of Coating Composition>

The viscosities (unit: dPa-s) of the base component and anticorrosive coating composition of each of Examples and Comparative Examples were measured using the No. 1 rotor of Viscometer VT-04F (manufactured by RION Co. , Ltd.) as a viscometer at a temperature adjusted to 23 ± 1°C. In addition, the amount (part (s) by weight) of diluting solvent used in dilution with the solvent until the viscosity of 100 parts by weight of the anticorrosive coating composition reached 20 dPa-s suitable for airless spray coating application was measured. The obtained results are set forth in Table

2. Further, the total amount of solvent (total solvent amount [part(s) by weight]) in the anticorrosive coating composition diluted with the solvent is set forth in Table 2. Xylene was used as the diluting solvent.

[Table 2]

| Evaluation items \ Examples, Comparative Examples | | Examples | | | | | | | | | | | | | | | | | | Comparative Examples | | |
|---|---|---|---|---|---|---|---|---|---|---|---|---|---|---|---|---|---|---|---|---|---|---|
| | | 1 | 2 | 3 | 4 | 5 | 6 | 7* | 8 | 9 | 10 | 11 | 12 | 13 | 14 | 15 | 16 | 17 | 18 | 1 | 2 | 3 |
| Base component | Viscosity (dPa·S) | 40 | 35 | 46 | 60 | 45 | 45 | 37 | 8 | 17 | 60 | 70 | 42 | 60 | 60 | 80 | 20 | 26 | 60 | >150 | >150 | 42 |
| Composition | Viscosity (dPa·S) | 19 | 30 | 34 | 49 | 25 | 15 | 22 | 16 | 19 | 35 | 20 | 27 | 45 | 37 | 40 | 25 | 29 | 37 | 70 | 61 | 33 |
| Amount of solvent (part(s) by weight) in 100 parts by weight of composition | | 21.9 | 23.3 | 21.5 | 19.8 | 21.2 | 22.6 | 21.9 | 21.9 | 21.6 | 21.5 | 21.5 | 19.8 | 18.0 | 18.9 | 18.0 | 18.9 | 18.0 | 17.3 | 21.5 | 21.5 | 22.0 |
| Amount of diluting solvent (part(s) by weight) | | 0.0 | 2.0 | 2.5 | 5.0 | 1.5 | 0.0 | 0.5 | 0.0 | 0.0 | 4.0 | 0.0 | 2.0 | 4.5 | 4.0 | 4.5 | 1.5 | 2.0 | 4.0 | 9.0 | 7.0 | 2.0 |
| Total amount of solvent (part(s) by weight) | | 21.9 | 25.3 | 24.0 | 24.8 | 22.7 | 22.6 | 22.4 | 21.9 | 21.6 | 25.5 | 21.5 | 21.8 | 22.5 | 22.9 | 22.5 | 20.4 | 20.0 | 21.3 | 30.5 | 28.5 | 24.0 |

* Reference Example

-Method of Producing Top Coating Composition

Each top coating composition was produced according to each of the following methods.

[Epoxy Resin Top Coating]

In a container, 30 parts by weight of epoxy resin "E-001-75X", 10 parts by weight of epoxy resin "E834-85X (T)", 20 parts by weight of talc "F-2 Talc", 10 parts by weight of ground calcium carbonate "CALCIUM CARBONATE SUPER-SS" (manufactured by Maruo Calcium Co., Ltd.), 3 parts by weight of carbon black "MA-100", 5 parts by weight of anti-sagging agent "DISPARLON A-630-20X" (manufactured by Kusumoto Chemicals, Ltd., 20% of non-volatile content), 6 parts by weight of propylene glycol monomethyl ether, 7 parts by weight of butyl cellosolve, and 9 parts by weight of methyl isobutyl ketone were put, glass beads were added thereto, these blending components were mixed by a paint shaker, and the glass beads were then removed to prepare a base component of an epoxy resin top coating.

A curing agent component of the epoxy resin top coating was prepared by mixing 80 parts by weight of polyamide adduct curing agent "PA-23", 3 parts by weight of tertiary amine "Ancamine K-54", 14 parts by weight of xylene, and 3 parts by weight of n-butanol by using a high-speed disperser (under ordinary temperature and ordinary pressure).

The epoxy resin top coating was prepared by mixing the obtained base component and the obtained curing agent component at a predetermined mixture ratio (base component: curing agent component = 9 : 1) before coating application.

[Acrylic Resin Top Coating]

In a container, 20 parts by weight of acrylic resin "Paraloid B-66" (manufactured by Rohm & Haas Japan KK), 16 parts by weight of precipitated barium sulfate "Precipitated Barium Sulfate FTB" (manufactured by Fukuoka Talc Co., Ltd.), 20 parts by weight of titanium oxide "Titanium White R-930", 3 parts by weight of anti-sagging agent "DISPARLON A-630-20X", 27 parts by weight of xylene, 2 parts by weight of butyl cellosolve, 9 parts by weight of aromatic hydrocarbon "Ipsol 100" (manufactured by Idemitsu Kosan Co., Ltd.), and 3 parts by weight of n-butanol were put, glass beads were added thereto, these blending components were mixed by a paint shaker, and the glass beads were then removed to prepare an acrylic resin top coating.

[Silyl Resin Antifouling Coating 1]

In a container, 20 parts by weight of silyl resin solution (having a solid content of 50%) as a copolymer of triisopropylsilyl acrylate (TIPSA), methyl methacrylate, and 2-hydroxypropyl acrylate, 6 parts by weight of rosin, 2 parts by weight of titanium oxide "Titanium R-5N" (manufactured by Sakai Chemical Industry Co., Ltd.), 43 parts by weight of cuprous oxide "NC-301" (manufactured by NISSIN CHEMCO Co., Ltd.), 6 parts by weight of zinc flower "Zinc Oxide JIS#3" (manufactured by HakusuiTech Co., Ltd.), 3 parts by weight of copper pyrithione "Copper Omadine Powder" (manufactured by ARCH CHEMICALS JAPAN, INC.), 1.5 parts by weight of anhydrous gypsum "D-2" (manufactured by NORITAKE CO. , LIMITED), 1.5 parts by weight of oxidized polyethylene paste "DISPARLON 4200-20X" (manufactured by Kusumoto Chemicals, Ltd., 20% of non-volatile content), 4 parts by weight of amide wax paste "DISPARLON A-630-20X", and 13.5 parts by weight of xylene were put, glass beads were added thereto, these blending components were mixed by a paint shaker, and the glass beads were then removed to prepare a silyl resin antifouling coating 1.

[Silyl Resin Antifouling Coating 2]

In a container, 15 parts by weight of silyl resin solution (having a solid content of 50%) as a copolymer of triisopropylsilyl methacrylate (TIPSMA), methyl methacrylate, ethyl acrylate, and methoxyethyl methacrylate, 10 parts by weight of gum rosin copper salt solution (having a solid content of 50%), 1 part by weight of SANSO CIZER E-2000H, 1 part by weight of tricresyl phosphate, 45 parts by weight of cuprous oxide "NC-301", 3 parts by weight of copper pyrithione "Copper Omadine Powder", 5 parts by weight of red iron oxide "No. 404" (manufactured by MORISHITA BENGARA KOGYO CO., LTD.), 3 parts by weight of talc "FC-1" (manufactured by Fukuoka Talc Co., Ltd.), 2 parts by weight of zinc flower "Zinc Oxide JIS#3", 1 part by weight of titanium oxide "Titanium R-5N", 1 part by weight of tetraethoxysilane, 3 parts by weight of amide wax paste "DISPARLON A-630-20X", and 10 parts by weight of xylene were put, glass beads were added thereto, these blending components were mixed by a paint shaker, and the glass beads were then removed to prepare a silyl resin antifouling coating 2.

[Polyester Resin Antifouling Coating]

In a container, 8 parts by weight of polyester resin solution (having a solid content of 65%) as a copolymer of glycerin, phthalic anhydride, propylene glycol, and hexahydro phthalic anhydride, 5 parts by weight of tricresyl phosphate, 5.5 parts by weight of rosin, 10.5 parts by weight of xylene, 2 parts by weight of methyl isobutyl ketone, 48 parts by weight of cuprous oxide "NC-301", 2 parts by weight of amide wax paste "DISPARLON A-630-20X", 1 part by weight of calcined gypsum "FT-2" (NORITAKE CO. , LIMITED), 0. 3 parts by weight of wetting and dispersing agent, 4 parts by weight of talc "FC-1", 2 parts by weight of titanium oxide "Titanium R-5N", 6 parts by weight of zinc flower "Zinc Oxide JIS#3", 2.5 parts by weight of 2-methylthio-4-t-butylamino-6-cyclopropylamino-s-triazine, 2.3 parts by weight of red iron oxide "No. 404", 0.6 parts by weight of C.I. Pigment Red 170, and 0.3 parts by weight of ethyl silicate were put, glass beads were added thereto, these blending components were mixed by a paint shaker, and the glass beads were then removed to prepare a polyester resin antifouling coating.

[Zinc Acrylic Resin Antifouling Coating]

In a four-neck flask equipped with a cooler, a thermometer, a dropping funnel, and a stirring machine, 59.9 parts by weight of propylene glycol monomethyl ether and 40.7 parts by weight of zinc oxide were loaded, and the temperature thereof was increased to 75°C while stirring them. Subsequently, a mixture comprising 43 parts by weight of methacrylic acid, 36 parts by weight of acrylic acid, and 5 parts of water was dropwise added from the dropping funnel at a constant velocity for 3 hours. After the end of the dropwise addition, they were further stirred for 2 hours, and 29.4 parts by weight of propylene glycol monomethyl ether was then added to obtain a transparent metal atom-containing polymerizable monomer mixture (a-1).

In an autoclave which was equipped with a cooler, a thermometer, a dropping tank, and a stirring machine, and in which pressure polymerization was possible, 10 parts by weight of propylene glycol monomethyl ether, 35 parts by weight of xylene, and 4 parts by weight of ethyl acrylate were loaded, the pressure and temperature thereof were increased to 350 kPa and 135°C, respectively, while stirring them. Subsequently, a transparent mixture comprising 15 parts by weight of methyl methacrylate, 48 parts by weight of ethyl acrylate, 15 parts by weight of n-butyl acrylate, 40 parts by weight of metal atom-containing polymerizable monomer mixture (a-1), 10 parts by weight of xylene, 1.8 parts by weight of chain transfer agent "NOFMER MSD" (manufactured by NOF CORPORATION), 4 parts by weight of 2,2'-azobisisobutyronitrile (AIBN), and 2 parts by weight of 2,2'-azobis(2-methylbutyronitrile) (AMBN) was dropwise added from the dropping tank at a constant velocity for 2.5 hours. After the end of the dropwise addition, the temperature was decreased to 110°C for 30 minutes, 0.5 parts by weight of t-butyl peroctoate and 5 parts by weight of xylene were dropwise added for 30 minutes, they were further stirred for 1 hour and 30 minutes, and 3 parts by weight of xylene was then added. The obtained mixture was filtered with 300-mesh to obtain a zinc acrylic resin solution (having a solid content of 55%).

35 parts by weight of obtained zinc acrylic resin solution (having a solid content of 55%), 2 parts by weight of chlorinated paraffin "Toyoparax 150" (manufactured by Tohoku Tosoh Chemical Co., Ltd.), 17 parts by weight of talc "FC-1", 10 parts by weight of precipitated barium sulfate "Precipitated Barium Sulfate 100" (manufactured by Sakai Chemical Industry Co. , Ltd.), 1 part by weight of calcined gypsum "FT-2", 1 part by weight of potash feldspar "Potash Feldspar KM325", 14 parts by weight of zinc flower "Zinc Oxide JIS#3", 3 parts by weight of red iron oxide "No. 404", 5 parts by weight of zinc pyrithione "Zinc Omadine Powder" (manufactured by ARCH CHEMICALS JAPAN, INC.), 3 parts by weight of 4-bromo-2-(4-chlorophenyl)-5-(trifluoromethyl)-1H-pyrrole-3-c arbonitrile, 2 parts by weight of oxidized polyethylene paste "DISPARLON 4200-20X", 1.5 parts by weight of amide wax paste "DISPARLON A-630-20X", and 5.5 parts by weight of n-butanol were put, glass beads were added thereto, these blending components were mixed by a paint shaker, and the glass beads were then removed to prepare a zinc acrylic resin antifouling coating.

<Evaluation of Overcoatability>

Overcoatability in the present invention is comprehensively evaluated based on interlayer adhesion between a primer coating film formed from the present composition on a substrate and a top coating film as well as the physical properties (e.g., anticorrosion property) of a substrate with an anticorrosive coating film, in which the primer coating film and the top coating film are layered on the substrate.

More specifically, the performance of interlayer adhesion between a primer coating film and a top coating film depends on a period before coating application a top coating composition with which the top coating film is formed as well as the resin type of the top coating composition, as in the problems of the conventional technologies described above. When a crosslinking reaction type top coating is overcoated on a primer coating film, the primer coating film is peeled from a substrate by the cure shrinkage stress thereof, causing rusting if the substrate is a metallic material. Thus, tolerability for a period before coating application a top coating composition and tolerability for a film defect occurring

due to the kind of a resin are generally regarded as overcoatability.

-Production of Test Plate

The anticorrosive coating composition of each of Examples and Comparative Examples was coated on a steel plate of 70 mm × 150 mm × 1.6 mm (in thickness) subjected to sandblast treatment so as to have a dried film thickness of 200 μm by using air spray, and then dried at ordinary temperature for a whole day and night. The steel plate was placed on an outdoor exposure table (according to JIS K 5600-7-6) placed in a site in CHUGOKU MARINE PAINTS, LTD. in Otake-shi, Hiroshima so that a coated surface was exposed. When the test plate coated with the anticorrosive coating composition was coated with an epoxy resin or acrylic resin top coating as the top coating composition, each coating application was subjected to outdoor exposure for 1 day, 3 days, 5 days, 7 days, 14 days, 21 days, or 30 days, and then coated so as to have a dried film thickness of 50 μm by using a film applicator. When a silyl resin, polyester resin, or zinc acrylic resin antifouling coating was coated as the top coating composition, each coating application was subjected to outdoor exposure for 1 day, 3 days, 5 days, or 7 days, and then coated so as to have a dried film thickness of 150 μm by using a film applicator.

After applying the top coating composition, the top coating composition was dried for 7 days in an atmosphere at 23°C and 50% RH according to JIS K 5600-1-6 to produce each test plate for evaluating overcoatability.

Each test plate for evaluating overcoatability, coated with the epoxy resin top coating or the acrylic resin top coating was immersed in salt water (having a salt concentration of 3%) at 40°C for 30 days, followed by evaluating each of adhesion (according to a crosscut method defined in JIS K 5600-5-6), the blister of a coating film (according to an A method in ASTM D-714-56), and the degree of the rust of the substrate (steel plate) (according to Table 1 in JIS K 5600-8-3). The obtained results are set forth in Tables 3-1 and 3-2.

In addition, each test plate for evaluating overcoatability coated with the various antifouling coatings was immersed in salt water (having a salt concentration of 3%) at 40°C for 30 days, followed by evaluating adhesion (according to a crosscut method defined in JIS K 5600-5-6) . The obtained results are set forth in Table 3-3.

It was determined that there was practically no problem in overcoatability when the adhesion was evaluated as 0 to 2 in the classification of the evaluation criterion in the JIS standard, and neither blister nor rust was present, i.e., the blister was evaluated as "10" in the evaluation criterion thereof, and the rust was evaluated as "Ri0" in the evaluation criterion thereof.

[Table 3-1]

| Kind of top coating | Evaluation items | Exposure period | Examples | | | | | | | | | | | | | | | | | | Comparative Examples | | |
|---|---|---|---|---|---|---|---|---|---|---|---|---|---|---|---|---|---|---|---|---|---|---|---|
| | | | 1 | 2 | 3 | 4 | 5 | 6 | 7* | 8 | 9 | 10 | 11 | 12 | 13 | 14 | 15 | 16 | 17 | 18 | 1 | 2 | 3 |
| Epoxy resin top coating | Adhesion | 1 day | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 3 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 5 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 7 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 14 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 21 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | | 30 days | 0 | 0 | 0 | 0 | 0 | 0 | 0 | 0 | 0 | 0 | 0 | 0 | 0 | 0 | 0 | 0 | 0 | 0 | 0 | 0 | 0 |
| | Blister | 1 day | 10 | 10 | 10 | 10 | 10 | 10 | 10 | 10 | 10 | 10 | 10 | 10 | 10 | 10 | 10 | 10 | 10 | 10 | 8M | 8F | 10 |
| | | 3 days | 10 | 10 | 10 | 10 | 10 | 10 | 10 | 10 | 10 | 10 | 10 | 10 | 10 | 10 | 10 | 10 | 10 | 10 | 8M | 8F | 10 |
| | | 5 days | 10 | 10 | 10 | 10 | 10 | 10 | 10 | 10 | 10 | 10 | 10 | 10 | 10 | 10 | 10 | 10 | 10 | 10 | 8D | 8F | 10 |
| | | 7 days | 10 | 10 | 10 | 10 | 10 | 10 | 10 | 10 | 10 | 10 | 10 | 10 | 10 | 10 | 10 | 10 | 10 | 10 | 8D | 8F | 8M |
| | | 14 days | 10 | 10 | 10 | 10 | 10 | 10 | 10 | 10 | 10 | 10 | 10 | 10 | 10 | 10 | 10 | 10 | 10 | 10 | 8D | 8F | 8M |
| | | 21 days | 10 | 10 | 10 | 10 | 10 | 10 | 10 | 10 | 10 | 10 | 10 | 10 | 10 | 10 | 10 | 10 | 10 | 10 | 8D | 8F | 8M |
| | | 30 days | 10 | 10 | 10 | 10 | 10 | 10 | 10 | 10 | 10 | 10 | 10 | 10 | 10 | 10 | 10 | 10 | 10 | 10 | 8D | 8F | 8M |
| | Rust | 1 day | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri2 | Ri2 | Ri0 |
| | | 3 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri2 | Ri2 | Ri0 |
| | | 5 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri3 | Ri2 | Ri0 |
| | | 7 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri3 | Ri2 | Ri2 |
| | | 14 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri3 | Ri2 | Ri2 |
| | | 21 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri3 | Ri2 | Ri2 |
| | | 30 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri3 | Ri2 | Ri2 |

* Reference Example

[Table 3-2]

| Kind of top coating | Evaluation items | Exposure period | Examples | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7* | 8 | 9 | 10 | 11 | 12 | 13 | 14 | 15 | 16 | 17 | 18 |
| Acrylic resin top coating | Adhesion | 1 day | 1 | 1 | 1 | 1 | 1 | 1 | 2 | 1 | 1 | 1 | 1 | 1 | 1 | 1 | 1 | 1 | 1 | 1 |
| | | 3 days | 1 | 1 | 1 | 1 | 1 | 2 | 2 | 1 | 1 | 1 | 1 | 1 | 1 | 1 | 1 | 1 | 1 | 1 |
| | | 5 days | 1 | 1 | 1 | 1 | 1 | 2 | 2 | 1 | 1 | 1 | 1 | 1 | 1 | 1 | 1 | 1 | 1 | 1 |
| | | 7 days | 1 | 1 | 1 | 1 | 1 | 2 | 2 | 1 | 1 | 1 | 1 | 1 | 1 | 1 | 1 | 1 | 1 | 1 |
| | | 14 days | 1 | 1 | 1 | 1 | 1 | 2 | 2 | 1 | 1 | 1 | 1 | 1 | 1 | 1 | 1 | 1 | 1 | 1 |
| | | 21 days | 1 | 1 | 1 | 2 | 1 | 2 | 2 | 2 | 2 | 1 | 1 | 1 | 1 | 1 | 1 | 1 | 1 | 1 |
| | | 30 days | 1 | 1 | 2 | 2 | 2 | 2 | 2 | 2 | 2 | 1 | 1 | 1 | 1 | 1 | 1 | 1 | 1 | 1 |
| | Blister | 1 day | 10 | 10 | 10 | 10 | 10 | 10 | 10 | 10 | 10 | 10 | 10 | 10 | 10 | 10 | 10 | 10 | 10 | 10 |
| | | 3 days | 10 | 10 | 10 | 10 | 10 | 10 | 10 | 10 | 10 | 10 | 10 | 10 | 10 | 10 | 10 | 10 | 10 | 10 |
| | | 5 days | 10 | 10 | 10 | 10 | 10 | 10 | 10 | 10 | 10 | 10 | 10 | 10 | 10 | 10 | 10 | 10 | 10 | 10 |
| | | 7 days | 10 | 10 | 10 | 10 | 10 | 10 | 10 | 10 | 10 | 10 | 10 | 10 | 10 | 10 | 10 | 10 | 10 | 10 |
| | | 14 days | 10 | 10 | 10 | 10 | 10 | 10 | 10 | 10 | 10 | 10 | 10 | 10 | 10 | 10 | 10 | 10 | 10 | 10 |
| | | 21 days | 10 | 10 | 10 | 10 | 10 | 10 | 10 | 10 | 10 | 10 | 10 | 10 | 10 | 10 | 10 | 10 | 10 | 10 |
| | | 30 days | 10 | 10 | 10 | 10 | 10 | 10 | 10 | 10 | 10 | 10 | 10 | 10 | 10 | 10 | 10 | 10 | 10 | 10 |
| | Rust | 1 day | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 3 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 5 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 7 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 14 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 21 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | 30 days | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |

* Reference Example

[Table 3-3]

| Kind of top coating | Evaluation item | Exposure period | Examples | | | | | | | | | | | | | | | | | | Comparative Examples | | |
|---|---|---|---|---|---|---|---|---|---|---|---|---|---|---|---|---|---|---|---|---|---|---|---|
| | | | 1 | 2 | 3 | 4 | 5 | 6 | 7* | 8 | 9 | 10 | 11 | 12 | 13 | 14 | 15 | 16 | 17 | 18 | 1 | 2 | 3 |
| Silyl resin antifouling coating 1 | Adhesion | 1 day | 1 | 0 | 0 | 0 | 0 | 1 | 1 | 1 | 1 | 1 | 1 | 1 | 0 | 0 | 0 | 1 | 1 | 1 | 0 | 0 | 1 |
| | | 3 days | 1 | 0 | 0 | 1 | 0 | 1 | 1 | 1 | 1 | 1 | 1 | 1 | 0 | 0 | 0 | 1 | 1 | 1 | 0 | 1 | 1 |
| | | 5 days | 1 | 0 | 1 | 1 | 1 | 1 | 1 | 1 | 1 | 1 | 1 | 1 | 0 | 0 | 0 | 1 | 1 | 1 | 0 | 1 | 1 |
| | | 7 days | 1 | 0 | 1 | 1 | 1 | 1 | 1 | 1 | 1 | 1 | 1 | 1 | 0 | 0 | 0 | 1 | 1 | 1 | 0 | 1 | 1 |
| Silyl resin antifouling coating 2 | | 1 day | - | 1 | - | - | - | - | - | - | - | 1 | 1 | 0 | 0 | 0 | 0 | 1 | 1 | 1 | 1 | 1 | 2 |
| | | 3 days | - | 2 | - | - | - | - | - | - | - | 1 | 1 | 1 | 1 | 0 | 1 | 1 | 1 | 1 | 2 | 2 | 3 |
| | | 5 days | - | 2 | - | - | - | - | - | - | - | 1 | 2 | 2 | 1 | 1 | 1 | 2 | 1 | 1 | 3 | 3 | 3 |
| | | 7 days | - | 2 | - | - | - | - | - | - | - | 2 | 2 | 2 | 2 | 1 | 1 | 2 | 2 | 2 | 3 | 3 | 4 |
| Polyester resin antifouling coating | | 1 day | 1 | 1 | 1 | 1 | 1 | 1 | 1 | 1 | 1 | 1 | 1 | 1 | 1 | 1 | 1 | 1 | 1 | 1 | 1 | 1 | 1 |
| | | 3 days | 1 | 1 | 1 | 1 | 1 | 2 | 2 | 1 | 1 | 1 | 1 | 1 | 1 | 1 | 1 | 1 | 1 | 1 | 1 | 1 | 1 |
| | | 5 days | 1 | 1 | 1 | 1 | 2 | 2 | 2 | 1 | 2 | 1 | 1 | 1 | 1 | 1 | 1 | 1 | 1 | 1 | 1 | 2 | 1 |
| | | 7 days | 2 | 1 | 1 | 1 | 2 | 2 | 2 | 2 | 2 | 1 | 2 | 1 | 1 | 1 | 1 | 1 | 1 | 1 | 1 | 2 | 1 |
| Zinc acrylic resin antifouling coating | | 1 day | 1 | 0 | 0 | 0 | 0 | 1 | 1 | 1 | 1 | 1 | 1 | 1 | 0 | 0 | 0 | 1 | 1 | 1 | 1 | 0 | 1 |
| | | 3 days | 1 | 1 | 1 | 0 | 1 | 2 | 1 | 1 | 1 | 1 | 1 | 1 | 0 | 0 | 0 | 1 | 1 | 1 | 1 | 0 | 1 |
| | | 5 days | 1 | 1 | 1 | 1 | 2 | 2 | 1 | 1 | 1 | 1 | 1 | 1 | 0 | 0 | 0 | 1 | 1 | 1 | 1 | 1 | 1 |
| | | 7 days | 1 | 1 | 1 | 1 | 2 | 2 | 1 | 1 | 1 | 1 | 1 | 1 | 0 | 0 | 0 | 1 | 1 | 1 | 1 | 1 | 1 |

* Reference Example

<Evaluation of Anticorrosion Property>

·Production of Test Plate

An inorganic zinc silicate shop primer "CERABOND 2000" (manufactured by CHUGOKU MARINE PAINTS, LTD.) was coated on a steel plate of 70 mm × 150 mm × 2.3 mm (in thickness) subjected to sandblast treatment so as to have a dried film thickness of 15 μm, and dried at ordinary temperature for a whole day and night. Then, the steel plate was placed on an outdoor exposure table (according to JIS K 5600-7-6) placed in a site of CHUGOKU MARINE PAINTS, LTD. in Otake-shi, Hiroshima so that a coated surface was exposed. The steel plate was subjected to outdoor exposure for two months. The anticorrosive coating composition of each of Examples and Comparative Examples was coated on the two kinds of the steel plates of the uncoated steel plate and the coated steel plate subjected to the outdoor exposure so as to have a dried film thickness of 200 μm by using air spray, and then dried for 7 days in an atmosphere at 23°C and 50% RH according to JIS K 5600-1-6 to produce each test plate for evaluating an anticorrosion property. Further, incision 2 having a length of 5 cm was generated, at position of 1 cm from both ends of the long sides and of 2 cm from any one of the short sides of each obtained test plate 1 for evaluating an anticorrosion property, to arrive at a surface of the substrate steel plate, as illustrated in Fig. 1.

-Salt Water Immersion Test

Each test plate for evaluating an anticorrosion property in which the incision had been generated was immersed for 30 days in salt water (having a salt concentration of 3%) at 40°C, and the degree of the rust of the substrate was evaluated according to grades defined in Table 1 in JIS K 5600-8-3. In addition, the blister of the coating film in a cut periphery 3 (Fig. 1) was evaluated according to the A method in ASTM D-714-56. The obtained results are set forth in Table 4.

-Electric Anticorrosion Test

A zinc anode was connected to each of the test plates for evaluating an anticorrosion property in which the incision had been generated, so that an electric current density of 5 $mA/m^2$ or less was achieved. Each of the test plates was immersed for 30 days in salt water (having a salt concentration of 3%) at 40°C, and the degree of the rust of the substrate was evaluated according to the grades defined in Table 1 in JIS K 5600-8-3. In addition, the blister of the coating film in the cut periphery (reference numeral 3 in Fig. 1) was evaluated according to the A method in ASTM D-714-56. The obtained results are set forth in Table 4.

It was determined that there was practically no problem in anticorrosion property when neither rust nor blister was present in both of the salt water immersion test and the electric anticorrosion test, i.e., the blister was evaluated as "10" in the evaluation criterion thereof, and the rust was evaluated as "Ri0" in the evaluation criterion thereof.

[Table 4]

| Examples / Evaluation items | | | Examples | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7* | 8 | 9 | 10 | 11 | 12 | 13 | 14 | 15 | 16 | 17 | 18 |
| Salt water immersion | Uncoated steel plate | Rust | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | blister | 10 | 10 | 10 | 10 | 10 | 10 | 10 | 10 | 10 | 10 | 10 | 10 | 10 | 10 | 10 | 10 | 10 | 10 |
| | Steel plate coated with CERABOND 2000 | Rust | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | blister | 10 | 10 | 10 | 10 | 10 | 10 | 10 | 10 | 10 | 10 | 10 | 10 | 10 | 10 | 10 | 10 | 10 | 10 |
| Electric anticorrosion | Uncoated steel plate | Rust | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | blister | 10 | 10 | 10 | 10 | 10 | 10 | 10 | 10 | 10 | 10 | 10 | 10 | 10 | 10 | 10 | 10 | 10 | 10 |
| | Steel plate coated with CERABOND 2000 | Rust | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 | Ri0 |
| | | blister | 10 | 10 | 10 | 10 | 10 | 10 | 10 | 10 | 10 | 10 | 10 | 10 | 10 | 10 | 10 | 10 | 10 | 10 |

* Reference Example

On the basis of the test results, the viscosities of the compositions in Comparative Examples 1 to 2 were high, and the adjustment to each of the viscosities with appropriate coating workability required the large amount of diluting solvent was required and resulted in the increased amount of solvent contained in the coating composition during the coating application. In other words, the compositions of Comparative Examples 1 to 2 are coating compositions with a large load on the environment and the human body. With regard to the anticorrosive coating film formed from each of the compositions of Comparative Examples 1 to 3, the coating film in itself exhibits a sufficient anticorrosion property. However, when a crosslinking reaction type top coating is coated on a surface of the coating film, the blister of the coating film and the rust of the substrate occurs due to stress caused by the cure shrinkage of the top coating. Therefore, the anticorrosive coating film is considered to result in insufficient overcoatability. In contrast, it was found that each of the compositions of Examples 1 to 6 and 8 to 18 and Reference Example 7 is an environmentally-friendly coating composition which has a low viscosity and enables the amount of diluting solvent to be reduced, and contains a polyvinyl alkyl ether (co)polymer, thereby having an excellent anticorrosion property and overcoatability that prevent the blister of a coating film and the rust of a substrate from occurring even if a crosslinking reaction type top coating is coated.

## Claims

1. An anticorrosive coating composition comprising an epoxy resin (a), a polyvinyl alkyl ether (co)polymer (b), and an amine curing agent (c),

   wherein the polyvinyl alkyl ether (co)polymer (b) is a homopolymer of a vinyl alkyl ether represented by Formula (1) or a polyvinyl alkyl ether copolymer obtained by polymerizing the vinyl alkyl ether represented by Formula (1) used in an amount of 50% by weight or more with respect to the total amount of monomer,

   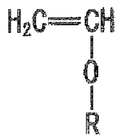 (1)

   wherein R represents a straight or branched alkyl group in which the number of carbon atoms is 2 to 4, and wherein the polyvinyl alkyl ether (co)polymer (b) is contained in an amount of 0.1 to 10% by weight as non-volatile content in the non-volatile content of the anticorrosive coating composition,as determined by the method given in the present description.

2. The anticorrosive coating composition according to claim 1, further comprising a reactive diluent (d) having an epoxy group.

3. The anticorrosive coating composition according to claim 1 or 2, further comprising a vinyl (co)polymer (e) excluding the polyvinyl alkyl ether (co)polymer (b).

4. An anticorrosive coating film obtained from the anticorrosive coating composition according to any one of claims 1 to 3.

5. A substrate with an anticorrosive coating film, the substrate being a layered body of the anticorrosive coating film according to claim 4 and a substrate.

6. The substrate with an anticorrosive coating film according to claim 5, wherein the substrate is an iron and steel structure.

7. A method of producing a substrate with an anticorrosive coating film, the method comprising:

   applying the anticorrosive coating composition according to any one of claims 1 to 3 on a substrate; and curing the coated anticorrosive coating composition to form an anticorrosive coating film.

## Patentansprüche

1. Korrosionsschutzbeschichtungszusammensetzung, umfassend ein Epoxidharz (a), ein Polyvinylalkylether-(Co)Polymer (b) und ein Amin-Härtungsmittel (c),

wobei das Polyvinylalkylether-(Co)Polymer (b) ein Homopolymer von einem durch Formel (1) dargestellten Vinylalkylether oder ein Polyvinylalkylether-Copolymer ist, das durch Polymerisieren des durch Formel (1) dargestellten Vinylalkylethers, verwendet in einer Menge von 50 Gew.-% oder mehr, in Bezug auf die Gesamtmonomermenge, erhalten wird,

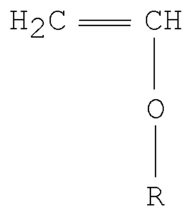

(1)

worin R eine geradkettige oder verzweigte Alkylgruppe darstellt, worin die Anzahl von Kohlenstoffatomen 2 bis 4 beträgt, und
worin das Polyvinylalkylether-(Co)Polymer (b) in einer Menge von 0,1 bis 10 Gew.-% als nichtflüchtiger Gehalt in dem nichtflüchten Gehalt der Korrosionsschutzbeschichtungszusammensetzung, bestimmt durch das in der vorliegenden Beschreibung angegebene Verfahren, enthalten ist.

2. Korrosionsschutzbeschichtungszusammensetzung gemäß Anspruch 1, ferner umfassend ein reaktives Verdünnungsmittel (d) mit einer Epoxygruppe.

3. Korrosionsschutzbeschichtungszusammensetzung gemäß Anspruch 1 oder 2, ferner umfassend ein Vinyl-(Co)Polymer (e) ausschließlich des Polyvinylalkylether-(Co)Polymers (b).

4. Korrosionsschutzbeschichtungsfilm, erhalten aus der Korrosionsschutzbeschichtungszusammensetzung gemäß einem der Ansprüche 1 bis 3.

5. Substrat mit einem Korrosionsschutzbeschichtungsfilm, wobei das Substrat ein geschichteter Körper aus dem Korrosionsschutzbeschichtungsfilm gemäß Anspruch 4 und einem Substrat ist.

6. Substrat mit einem Korrosionsschutzbeschichtungsfilm gemäß Anspruch 5, wobei das Substrat eine Eisen- oder Stahlstruktur ist.

7. Verfahren zur Herstellung eines Substrats mit einem Korrosionsschutzbeschichtungsfilm, wobei das Verfahren umfasst:

Auftragen der Korrosionsschutzbeschichtungszusammensetzung gemäß einem der Ansprüche 1 bis 3 auf ein Substrat und
Härten der beschichteten Korrosionsschutzbeschichtungszusammensetzung, um einen Korrosionsschutzbeschichtungsfilm zu bilden.

## Revendications

1. Composition de revêtement anticorrosion comprenant une résine époxy (a), un (co)polymère d’éther d’alkyle polyvinylique (b) et un agent de durcissement à base d’amine (c),

dans laquelle le (co)polymère d’éther d’alkyle polyvinylique (b) est un homopolymère d’un éther d’alkyle vinylique représenté par la Formule (1) ou un copolymère d’éther d’alkyle polyvinylique obtenu par la polymérisation de l’éther d’alkyle vinylique représenté par la Formule (1) utilisé en une quantité de 50 % en poids ou plus par rapport à la quantité totale de monomère,

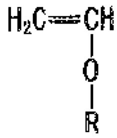

(1)

dans laquelle R représente un groupe alkyle droit ou ramifié dans lequel le nombre d'atomes de carbone est de 2 à 4, et
dans laquelle le (co)polymère d'éther d'alkyle polyvinylique (b) est contenu en une quantité de 0,1 à 10 % en poids en tant que contenu non-volatil dans le contenu non-volatil de la composition de revêtement anticorrosion, telle que déterminée par le procédé cité dans la présente description.

2. Composition de revêtement anticorrosion selon la revendication 1, comprenant en outre un diluant réactif (d) présentant un groupe époxy.

3. Composition de revêtement anticorrosion selon la revendication 1 ou 2, comprenant en outre un (co)polymère vinylique (e) excluant le (co)polymère d'éther d'alkyle polyvinylique (b).

4. Film de revêtement anticorrosion obtenu à partir de la composition de revêtement anticorrosion selon l'une quelconque des revendications 1 à 3.

5. Substrat pourvu d'un film de revêtement anticorrosion, le substrat étant un corps stratifié du film de revêtement anticorrosion selon la revendication 4 et d'un substrat.

6. Substrat pourvu d'un film de revêtement anticorrosion selon la revendication 5, dans lequel le substrat est une structure de fer et d'acier.

7. Procédé de production d'un substrat pourvu d'un film de revêtement anticorrosion, le procédé consistant à :

appliquer la composition de revêtement anticorrosion selon l'une quelconque des revendications 1 à 3 sur un substrat ; et
durcir la composition de revêtement anticorrosion étalée pour former un film de revêtement anticorrosion.

Fig. 1

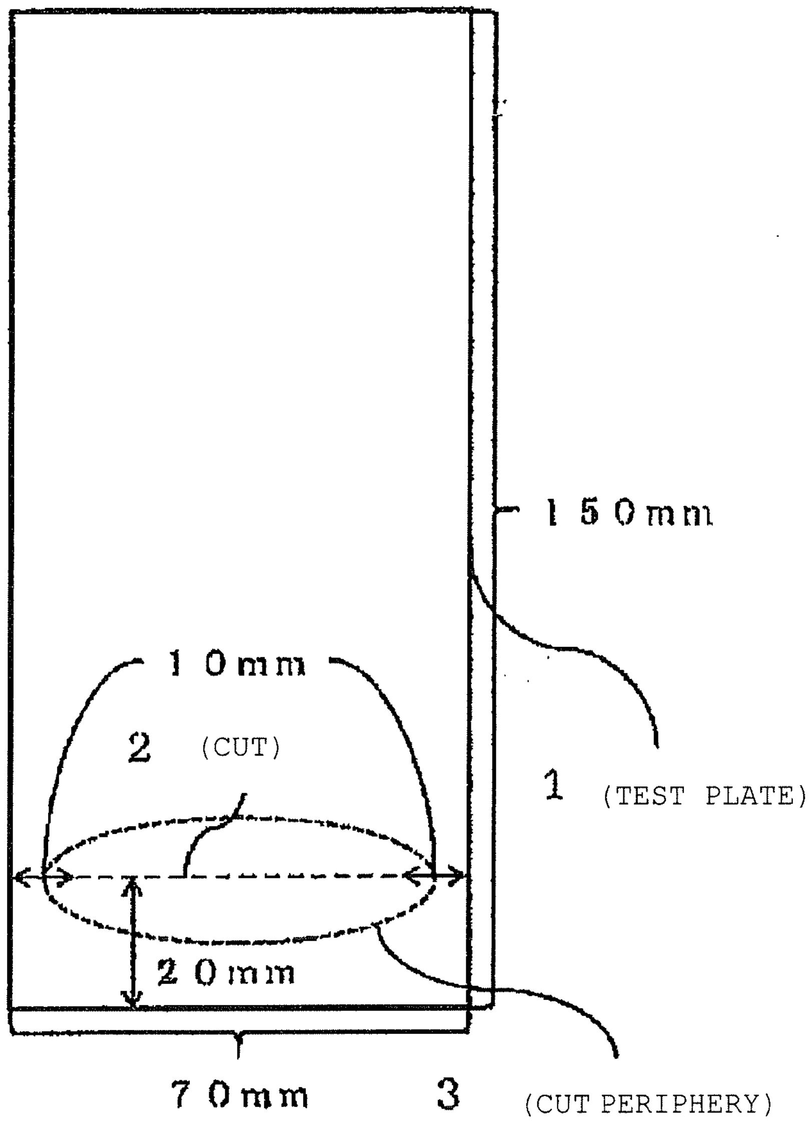

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10259351 A
- JP 2009197106 A
- WO 2015132366 A1
- WO 2014032844 A1
- US 2016017172 A1
- US 3532653 A
- JP S4948480 B